# FASCICULE DE BREVET EUROPEEN

(11) **EP 3 793 813 B1**
(45) Date de publication et mention de la délivrance du brevet: **12.07.2023**
(21) Numéro de dépôt: 19730404.1
(22) Date de dépôt: 16.05.2019
(51) Int. Cl.: B29D 30/00, B29D 30/42, B65G 47/248, B65G 47/252

(54) **INSTALLATION ET PROCÉDÉ DE FABRICATION DE NAPPES DE RENFORT AVEC DISPOSITIF DE RETOURNEMENT A PLAT DE BANDELETTES**
VORRICHTUNG UND VERFAHREN ZUR HERSTELLUNG VON VERSTÄRKTEN BÄNDERN MIT EINER APPARATUR ZUM UMDREHEN FLACHEN STREIFEN
EQUIPMENT AND METHOD OF MANUFACTURING REINFORCED WEBS WITH AN APPARATUS FOR TURNING FLAT STRIPS

(30) Priorité: 17.05.2018 FR 1854128
(43) Date de publication de la demande: 24.03.2021
(73) Titulaire: COMPAGNIE GENERALE DES ETABLISSEMENTS MICHELIN, 63000 Clermont-Ferrand (FR)
(72) Inventeur: LEBLANC, Dominique, 63040 CLERMONT-FERRAND CEDEX 9 (FR)
(74) Mandataire: Redouté, Gilles Pierre
(86) Numéro de dépôt international: PCT/FR2019/051117
(87) Numéro de publication internationale: WO 2019/220061

(56) Documents cités:
- EP-A1- 0 956 940
- EP-A2- 0 434 404
- WO-A1-02/00421
- CN-A- 105 905 573
- SE-C1- 184 197
- US-A- 4 923 554
- US-A1- 2001 030 103

## Description

La présente invention concerne le domaine de la fabrication des nappes de renfort destinées à entrer dans la structure de bandages, notamment de bandages pneumatiques pour véhicules.

La présente invention concerne plus particulièrement la réalisation de telles nappes par aboutage de laizes.

Il est en effet connu de réaliser des nappes de renfort en produisant tout d'abord, par exemple par calandrage, une bande continue, dite « nappe droit fil » ou « bande droit fil », qui comprend une pluralité de fils de renfort continus qui sont orientés parallèlement à la direction longitudinale de ladite bande et qui sont noyés dans une gomme, puis en découpant dans cette bande droit fil, au moyen d'une coupeuse, selon un angle de coupe prédéterminé, des tronçons de bande droit fil dits « laizes », ou « bandelettes », puis en aboutant deux à deux lesdites laizes par leurs lisières, parallèles aux fils de renfort, par exemple en déposant successivement lesdites laizes sur un tapis d'assemblage, de manière à constituer finalement une nappe de renfort au sein de laquelle les fils de renfort forment, par rapport à la direction longitudinale de ladite nappe de renfort, un angle, dit « angle de nappe », qui résulte de l'angle de coupe choisi.

Il est également connu d'utiliser, pour former les renforts de sommet d'un bandage pneumatique, deux nappes de renfort croisées, en superposant radialement deux nappes de renfort qui présentent chacune un angle de nappe différent de celui de l'autre nappe de renfort, et par exemple un angle de nappe de valeur opposée à l'angle de nappe de l'autre nappe de renfort.

Pour fabriquer un bandage, on doit donc, en pratique, produire séparément au moins deux modèles différents de nappes de renfort, dont au moins un premier modèle de nappe qui présente un angle de nappe orienté dans un premier sens par rapport à la direction longitudinale de la nappe de renfort, que l'on désignera par convention comme étant un angle de nappe « à gauche », et au moins un second modèle de nappe qui présente un angle de nappe orienté dans un second sens opposé au premier, ici par convention « à droite » (voir par exemple WO 02/00421 A1).

Dans certaines situations, et notamment lorsque l'installation de fabrication des nappes de renfort utilise une coupeuse dont la plage de réglage d'angle de coupe est trop limitée pour autoriser une inversion complète de l'angle de coupe, il est par conséquent nécessaire de doubler tout ou partie des équipements, et en particulier de prévoir au moins deux coupeuses, afin de disposer d'une part d'un premier poste de fabrication pour produire les nappes de renfort avec angle de nappe à gauche, et d'autre part d'un second poste de fabrication pour produire les nappes de renfort avec angle de nappe à droite.

Ceci augmente bien entendu l'encombrement et le coût global de l'installation, ainsi que les coûts de fonctionnement et de maintenance associés.

A l'inverse, on peut envisager d'équiper l'installation d'une coupeuse dont la plage de réglage est suffisamment étendue pour pouvoir sélectionner alternativement un premier angle de coupe, selon lequel on peut produire une série de laizes destinées à la fabrication d'une nappe avec angle à gauche, puis un second angle de coupe de signe opposé, selon lequel on peut produire une série de laizes destinées à la fabrication d'une nappe avec angle à droite.

Cependant, une telle installation peut également présenter certains inconvénients.

En effet, à chaque reconfiguration de la coupeuse pour sélectionner un nouvel angle de coupe, on génère une chute dans la bande droit fil, ce qui occasionne une perte de matière première.

En outre, la multiplication des reconfigurations de la coupeuse, à chaque changement du sens d'orientation de l'angle de coupe, selon l'angle de nappe souhaité, tend d'une part à augmenter le temps de cycle nécessaire à la fabrication des nappes de renfort, et d'autre part à provoquer une usure et une prise de jeu dans le mécanisme de la coupeuse, qui peut ainsi perdre en précision au fil du temps, et requérir une maintenance plus fréquente.

De tels inconvénients peuvent être préjudiciables en particulier lorsque l'on vise une production en grande série de nappes de renfort variées.

Les objets assignés à l'invention visent par conséquent à remédier aux inconvénients susmentionnés et proposer une installation de fabrication de nappes de renfort qui soit polyvalente, de sorte à permettre la production de l'ensemble des nappes de renfort nécessaires à l'obtention d'une structure de renfort croisée, tout en étant relativement compacte, robuste, fiable, et économe en matière première.

Les objets assignés à l'invention sont atteints au moyen d'une installation de fabrication d'une nappe de renfort, ladite installation comprenant :
- un poste de préparation qui est agencé pour préparer des laizes par découpe d'une bande dite « bande droit fil » qui est formée d'une pluralité de fils de renfort qui sont noyés dans au moins une couche de gomme et qui s'étendent parallèlement entre eux selon la direction longitudinale de ladite bande droit fil,
- un poste d'aboutage agencé pour abouter successivement, par leurs lisières, les laizes issues du poste de préparation, de sorte à former une nappe de renfort,
ladite installation étant caractérisée en ce qu'elle comprend un poste de retournement de laize, qui est interposé entre le poste de préparation et le poste d'aboutage et qui comporte :
- une première surface de réception, agencée pour recevoir une laize préparée par le poste de préparation et pour maintenir ladite laize selon une première orientation dans laquelle ladite laize, qui est délimitée en épaisseur par une première face et par une seconde face opposée à ladite première face, repose et est maintenue sur ladite première surface de réception par sa seconde face, et présente sa première face en tant que face apparente,
- une seconde surface de réception associée à un dispositif inverseur qui est agencé pour faire passer une laize, initialement posée et maintenue sur la première surface de réception, de ladite première surface de réception à ladite seconde surface de réception, en opérant ainsi un renversement de la laize de sorte à conférer à ladite laize une seconde orientation, inverse de la première orientation, dans laquelle ladite laize se retrouve maintenue contre la seconde surface de réception par sa première face, et présente sa seconde face en tant que face apparente,
- un organe préhenseur agencé pour venir prélever une laize sélectivement sur la première surface de réception ou sur la seconde surface de réception afin de permettre au poste d'aboutage de constituer sélectivement une nappe de renfort à partir de laizes orientées conformément à la première orientation ou, respectivement, conformément à la seconde orientation.

Avantageusement, la mise en oeuvre d'un poste de retournement de laizes permet d'utiliser un seul et même poste de préparation, et un seul et même poste d'aboutage, pour réaliser, au choix, des nappes de renfort avec angle de nappe à gauche ou des nappes de renfort avec angle de nappe à droite, ce qui confère à l'installation une grande polyvalence.

Le retournement de la laize sur elle-même revient de préférence à faire passer la face supérieure de la laize en position inférieure et la face inférieure de la laize en position supérieure, de préférence selon un mouvement de basculement en roulis autour de l'axe longitudinal de ladite laize.

Le retournement permet une inversion en miroir du biseau de la laize, tel que ce biseau résulte de l'angle de coupe mis en oeuvre par la coupeuse.

Ainsi, à partir d'une seule et même configuration de la coupeuse qui découpe un format de laize donné, on peut obtenir au choix, selon que l'on utilise ladite laize telle quelle, sans la retourner, ou au contraire que l'on retourne ladite laize avant de l'utiliser, soit un premier modèle de laize pour nappe à angle de nappe à gauche, soit un second modèle de laize pour nappe à angle de nappe à droite, où, du fait du retournement, l'angle de nappe à droite est de même valeur absolue que l'angle de nappe à gauche tel qu'initialement coupé, mais de signe opposé.

Il n'est donc pas nécessaire de reconfigurer la coupeuse pour réaliser des laizes symétriques. Le processus de fabrication gagne donc en précision, et permet d'économiser de l'énergie ainsi que des opérations de maintenance.

Par ailleurs, l'utilisation de surfaces de réception dédiées au retournement, distinctes du tapis d'assemblage du poste d'aboutage sur lequel on aboute les laizes pour y former la nappe de renfort, permet avantageusement de maintenir efficacement et de façon très stable la laize pendant l'opération de retournement, et en particulier de ne jamais lâcher totalement la laize entre le moment où la coupeuse désolidarise ladite laize de la bande droit fil et le moment où cette même laize, après être passée par la première surface de réception, suite à la coupe, et après avoir éventuellement été transférée sur la seconde surface de réception par retournement, est prélevée sur la surface de réception où elle se trouve puis est aboutée à d'autres laizes déjà présentes sur le tapis d'assemblage.

On évite ainsi d'exposer la laize à des déformations incontrôlées, telle qu'une élongation, une contraction, un pli, ou une torsion notamment au niveau des extrémités biseautées de ladite laize. On évite de même de décaler accidentellement la laize par rapport au référentiel machine du poste d'aboutage.

En outre, l'installation selon l'invention permet avantageusement d'effectuer les opérations de préparation et de retournement d'une laize en temps masqué, pendant que l'on transfère jusqu'au poste d'aboutage et que l'on aboute une autre laize qui aura été précédemment préparée, et le cas échéant retournée. On peut ainsi réduire le temps de cycle de fabrication de la nappe de renfort.

On notera également que l'invention peut avantageusement, dans certains cas, être mise en oeuvre en rattrapage sur des installations existantes, simplement en insérant un poste de retournement entre un poste de préparation et un poste d'aboutage existants.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue d'ensemble en perspective, un exemple d'installation selon l'invention.
La figure 2 illustre, selon une vue de détail en perspective, le poste de préparation et le poste de retournement de l'installation de la figure 1.
La figure 3 illustre, selon une vue de détail en perspective, la constitution d'une nappe de renfort avec angle de nappe à gauche, à partir de laizes non retournées, transférées depuis la première surface de réception du poste de retournement d'une installation telle que celle représentée sur la figure 1.
La figure 4 illustre, selon une vue de détail en perspective, la constitution d'une nappe de renfort avec angle de nappe à droite, à partir de laizes retournées, transférées depuis la seconde surface de réception du poste de retournement de l'installation de la figure 3.
La figure 5 illustre, selon une vue de détail en perspective, un poste de retournement à volets articulés utilisé par l'installation des figures 1 à 4, avec une laize, non renversée, qui repose sur la première surface de réception, dans une première orientation.
La figure 6 illustre, selon une vue de détail en perspective, le mouvement de basculement du second volet du poste de retournement sur le premier volet portant la laize, dans un sens de fermeture.
La figure 7 illustre, selon une vue de détail en perspective, le second volet du poste de retournement en position rabattue contre le premier volet, pour permettre le transfert de la laize depuis la première surface de réception portée par le premier volet vers la seconde surface de réception portée par le second volet.
La figure 8 illustre, selon une vue de détail en perspective avec arrachement de matière, une phase où, le second volet étant refermé sur le premier volet, on active un organe de maintien associé au second volet, en commandant la translation d'une tige de manoeuvre qui agit sur des leviers reliés à des poussoirs, de sorte à rapprocher un aimant permanent de la seconde surface de réception portée par ledit second volet, et ainsi pouvoir attirer et plaquer la laize contre la seconde surface de réception.
La figure 9 illustre, selon une vue en perspective, le détail du premier volet du poste de retournement, ainsi que l'organe de maintien correspondant à aimant permanent et le mécanisme de manoeuvre associé.
La figure 10 illustre, selon une vue en perspective, le poste de retournement des figures 5 à 8 après transfert de la laize sur la seconde surface de réception et ouverture du second volet.
La figure 11 illustre, selon une vue schématique en perspective, le principe d'un agencement, au sein d'un bloc sommet de bandage, de deux nappes de renfort croisées produites par une installation selon l'invention.

La présente invention concerne une installation 1 de fabrication d'une nappe de renfort 2.

Une telle nappe de renfort 2 est destinée à renforcer la structure d'un bandage 3, et plus particulièrement d'un bandage 3 destiné à être utilisé sur un véhicule roulant.

Un tel bandage 3 pourra être plein, ou à structure alvéolaire (typiquement pour un bandage de roue anti-crevaison), ou, de préférence, pneumatique, sans sortir du cadre de l'invention.

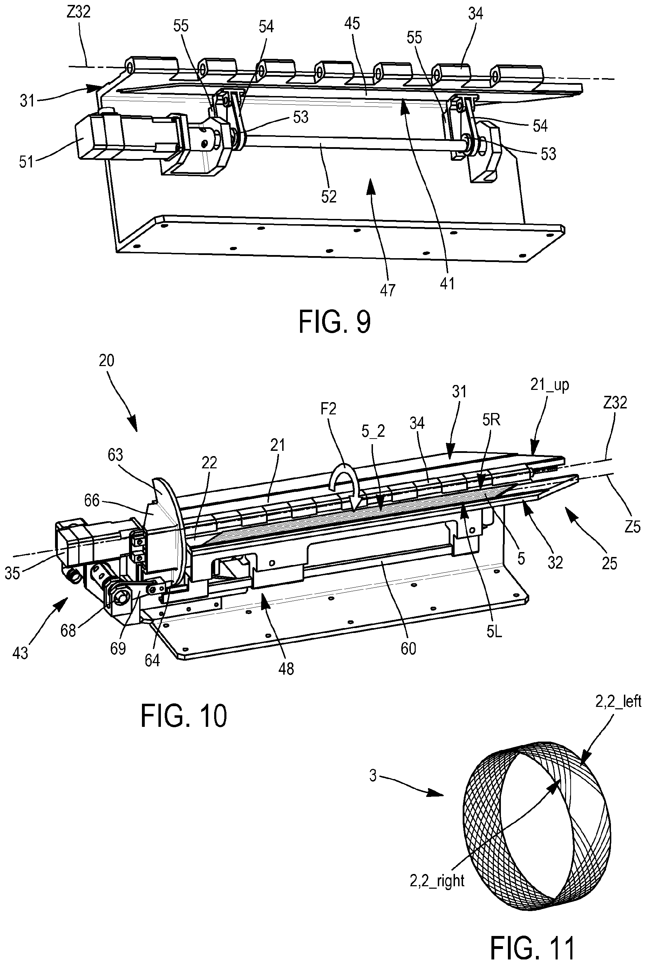

De préférence, tel que cela est illustré sur la figure 11, la nappe de renfort 2 peut être destinée à entrer dans la composition du « bloc sommet » d'un bandage 3, afin de renforcer la structure dudit bandage pneumatique dans un espace circonférentiel compris entre la nappe carcasse et la bande de roulement.

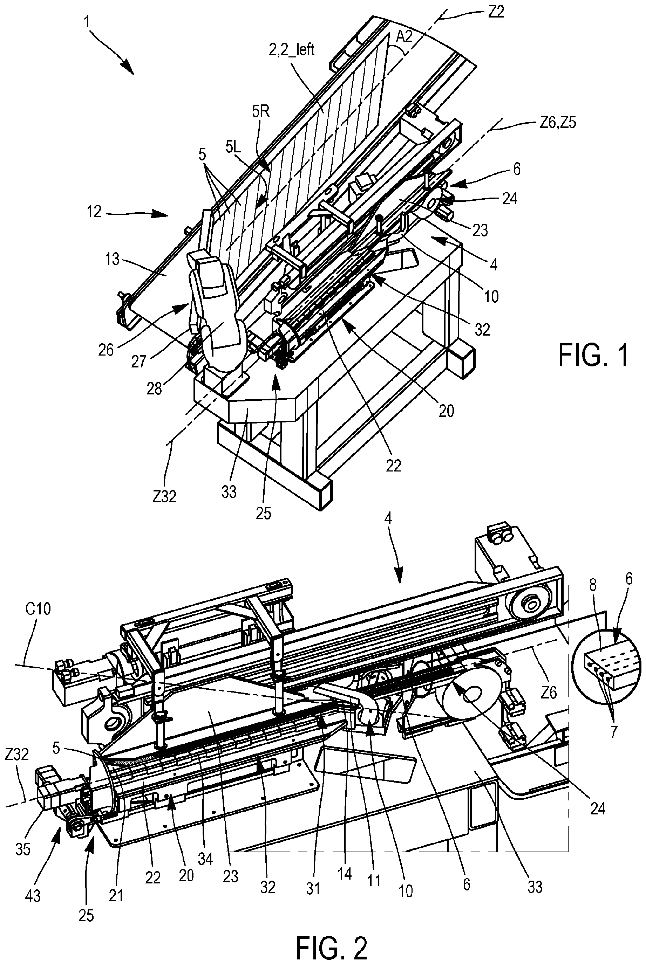

L'installation comprend tout d'abord, tel que cela est visible sur les figures 1 et 2, un poste de préparation 4 qui est agencé pour préparer des laizes 5 par découpe d'une bande dite « bande droit fil » 6.

Ladite bande droit fil 6 est, de façon connue en soi, formée d'une pluralité de fils de renfort 7, de préférence continus, qui sont noyés dans au moins une couche de gomme 8 et qui s'étendent parallèlement entre eux selon la direction longitudinale Z6 de ladite bande droit fil 6.

Les fils de renfort 7 peuvent être en matériau métallique ou en matériau textile, tel que du nylon ou de l'aramide, ou en tout autre matériau approprié dont le module d'élasticité est supérieur à celui de la gomme. Le matériau des fils de renfort sera choisi en fonction des propriétés que l'on souhaite conférer aux laizes 5.

De préférence, le matériau constitutif de tout ou partie des fils de renfort 7 sera sensible à l'attraction magnétique, de sorte à permettre une manipulation de la bande droit fil 6 et/ou des laizes 5 issues de celle-ci par des organes de maintien à aimant.

Selon une possibilité de mise en oeuvre préférentielle, chaque fil de renfort 7 peut être monobrin, c'est-à-dire formé d'un unique brin d'un seul tenant.

En variante, sans sortir du cadre de l'invention, chaque fil de renfort 7 pourrait toutefois être multibrins, c'est-à-dire être formé de plusieurs brins réunis par tressage en un câble.

Par « gomme » 8, on désigne un matériau élastomère, à base de caoutchouc cru, c'est-à-dire non vulcanisé, ou à base d'un mélange de caoutchoucs crus, ledit ou lesdits caoutchoucs pouvant être synthétiques ou naturels.

Bien entendu, ladite gomme 8 peut contenir des charges, telles que de la silice ou du noir de carbone, des adjuvants, tels que le soufre, des plastifiants, tels que des huiles, etc.

La bande droit fil 6 peut être produite par exemple par une opération de calandrage, au cours de laquelle les fils de renfort 7 disposés parallèlement les uns aux autres sont engagés entre deux couches de gomme 8 (dites aussi « skim de gomme ») qui sont pressées l'une contre l'autre au moyen de cylindres contrarotatifs.

Bien entendu, on pourra utiliser, sans sortir du cadre de l'invention, tout autre procédé adapté pour fabriquer des bandes droit fil 6, par exemple un procédé d'extrusion.

Le poste de préparation 4 comprendra également une coupeuse 10, qui est agencée pour sectionner transversalement, à plusieurs reprises, la bande droit fil 6 selon une direction de coupe C10 prédéterminée, de manière à former des tronçons de bande droit fil de longueur prédéterminée.

La direction de coupe C10 est sécante à la direction longitudinale des fils de renfort 7, et forme par rapport à la direction longitudinale des fils de renfort 7, et donc par rapport à la direction longitudinale Z6 de la bande droit fil 6, un angle de coupe qui correspond à l'angle de nappe A2 visé.

Chaque tronçon de bande droit fil ainsi obtenu, qui s'étend entre deux traits de coupe successifs, et qui présente de préférence une forme biseautée (dès lors que la direction de coupe C10 n'est pas strictement perpendiculaire aux fils de renfort 7), forme une laize 5 au sens de l'invention.

Par commodité de description, on pourra assimiler la direction longitudinale Z5 de la laize 5 avec la direction d'orientation des fils de renforts 7 au sein de ladite laize 5.

Par convention, on désigne comme « lisières » 5L, 5R les bords latéraux de la laize 5, qui s'étendent parallèlement aux fils de renforts 7.

La coupeuse 10 pourra comporter tout organe coupant 11 approprié, par exemple une lame 11 rectiligne de type guillotine, orientée selon la direction de coupe C 10 souhaitée, tel que cela est illustré sur la figure 2, ou bien, selon un autre exemple, un disque coupant qui roule le long d'un rail orienté selon la direction de coupe C10 souhaitée.

Afin de soutenir l'extrémité de la laize 5 pendant l'opération de coupe, la coupeuse 10 comprendra de préférence, tel que cela est visible sur la figure 2, une enclume 14, qui est agencée pour coopérer avec l'organe coupant 11, par exemple la lame 11, pour produire l'effet de cisaillement nécessaire à la coupe.

La coupeuse 10 est de préférence orientable, de sorte à pouvoir sélectionner librement la direction de coupe C10, par rapport à la direction longitudinale Z6 de la bande droit fil 6, et donc de sorte à pouvoir sélectionner librement l'angle de coupe, et par conséquent l'angle de nappe A2 qui en résulte, parmi une pluralité d'angles de coupe possibles.

Par commodité de description, on pourra assimiler, en valeur absolue, l'angle de coupe et l'angle de nappe A2 dans ce qui suit.

Tel que cela est illustré sur la figure 1, l'installation 1 comprend également un poste d'aboutage 12 qui est agencé pour abouter successivement, par leurs lisières 5L, 5R, les laizes 5 issues du poste de préparation 4, de sorte à former une nappe de renfort 2, 2_left, 2_right.

A cet effet, ledit poste d'aboutage 12 comprend de préférence une surface d'assemblage 13, qui peut être par exemple un cylindre, un noyau toroïdal, ou, de préférence, tel que cela est illustré sur les figures 1, 3 et 4, un tapis d'assemblage sensiblement plan. Par commodité de description, on pourra assimiler ladite surface d'assemblage 13 à un tapis d'assemblage dans ce qui suit.

Ladite surface d'assemblage 13 est agencée pour recevoir une pluralité de laizes 5 qui sont déposées et aboutées successivement les unes aux autres pour former progressivement la nappe de renfort 2.

Ladite surface d'assemblage 13 est de préférence motorisée de sorte à se décaler progressivement, dans la direction longitudinale Z2 de la nappe de renfort 2, au fur et à mesure de la pose des laizes 5.

Selon l'invention, l'installation 1 comprend un poste de retournement 20 de laize, qui est interposé entre le poste de préparation 4 et le poste d'aboutage 12.

Ledit poste de retournement 20 permettra avantageusement de retourner la laize 5, lorsque nécessaire, après que ladite laize 5 aura été détachée de la bande droit fil 6 par la coupeuse 10.

Tel que cela est notamment visible sur les figures 2, 3, 4, 5 et 10, ledit poste de retournement de laize 20 comporte tout d'abord une première surface de réception 21, qui est agencée pour recevoir une laize 5 préparée par le poste de préparation 4 et pour maintenir ladite laize 5 selon une première orientation, qui correspond ici aux figures 2, 3 et 5.

Dans cette première orientation, ladite laize 5, qui est délimitée en épaisseur par une première face 5_1 et par une seconde face 5_2 opposée à ladite première face 5_1, repose et est maintenue sur la première surface de réception 21 par sa seconde face 5_2 (ici orientée vers le bas sur les figures 2, 3 et 5), et présente sa première face 5_1 en tant que face apparente (ici orientée vers le haut sur ces mêmes figures 2, 3 et 5).

La « face apparente » de la laize 5, ici la première face 5_1 dans la première orientation, correspond, par opposition à la « face cachée » de la laize 5 qui repose contre la surface de réception 21, à la face libre de la laize 5, qui reste visible et accessible lorsque la laize 5 repose sur la face de réception 21 en vue d'être soit retournée soit directement transférée en l'état vers le poste d'aboutage 12.

On notera que, selon une possibilité de mise en oeuvre de l'invention, le poste de préparation 4 pourra comporter un transporteur 23, agencé pour venir prélever la bande droit fil 6 et amener cette dernière jusque sur la première surface de réception 21 du poste de retournement 20, ici selon un mouvement de droite à gauche sur la figure 2.

La coupeuse 10 pourra alors être actionnée une fois que la bande droit fil 6 se trouve pressée par le transporteur 23 contre la première surface de réception 21, dans une position dite « position de coupe ». De la sorte, la laize 5 ainsi détachée de la bande droit fil 6 se trouvera directement sur la première surface de réception 21.

Le transporteur 23 pourra notamment être monté mobile en translation horizontale afin de pouvoir effectuer des va-et-vient entre d'une part un poste d'alimentation 24 qui apporte la bande droit fil 6 sur le poste de préparation 4 et d'autre part la première surface de réception 21.

Ledit transporteur 23 pourra être pourvu de moyens de préhension aimantés pour saisir la bande droit fil 6.

Un exemple de fonctionnement d'un tel transporteur 23 (ou « moyen de transfert ») associé à une coupeuse 10 (ou « moyen de coupe ») est notamment décrit dans la demande WO-2010/066895 déposée par la demanderesse.

Ceci étant, on pourrait bien entendu prévoir, sans sortir du cadre de l'invention, tout poste de préparation 4 équivalent, et plus particulièrement tout système équivalent permettant de découper des laizes 5 et d'acheminer lesdites laizes 5 sur la première surface de réception 21.

En particulier, on pourrait envisager de découper la laize 5 et de la séparer de la bande droit fil 6 avant de transporter ladite laize 5 jusqu'à la première surface de réception 21.

Selon l'invention, le poste de retournement de laize 20 comprend également une seconde surface de réception 22.

Ladite seconde surface de réception 22 est associée à un dispositif inverseur 25 qui est agencé pour faire passer une laize 5, initialement posée et maintenue sur la première surface de réception 21, de ladite première surface de réception 21 à ladite seconde surface de réception 22, en opérant ainsi un renversement de la laize 5 de sorte à conférer à ladite laize 5 une seconde orientation, inverse de la première orientation.

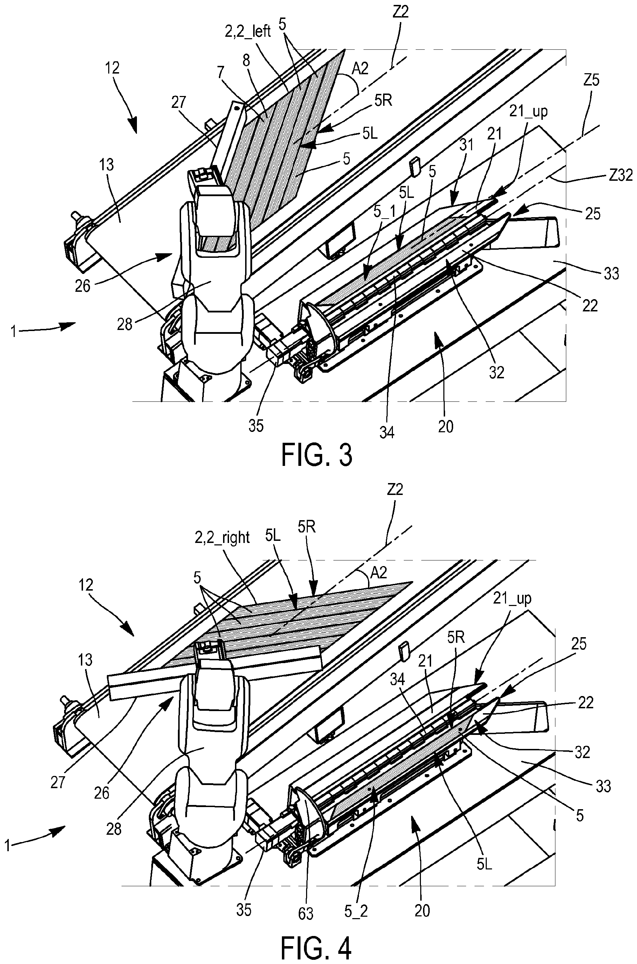

Dans ladite seconde orientation, la laize 5 se retrouve cette fois maintenue contre la seconde surface de réception 22 par sa première face 5_1, et présente sa seconde face 5_2 en tant que face apparente, tel que cela est visible sur les figures 4 et 10.

Avantageusement, en permutant le support qui maintient la laize 5, ici en transférant ladite laize 5 depuis un premier support formé par la première surface de réception 21 à un second support distinct formé par la seconde surface de réception 22, on peut retourner la laize 5 en opérant une symétrie miroir, par rapport à un plan de symétrie médian compris entre et parallèle à la première face 5_1 et la seconde face 5_2 de la laize 5, et ainsi mettre à disposition du poste d'aboutage 12 une laize 5 retournée dont l'angle de coupe, et par conséquent l'angle de nappe A2 qui en résulte, est de même valeur absolue que, mais de signe opposé à, l'angle de coupe de la laize 5 non retournée.

En pratique, on peut ainsi sélectivement conserver ou inverser l'orientation du biseau de la laize 5, tel que ce biseau est défini par la direction de coupe C10 impartie par la coupeuse 10, selon que l'on veut réaliser une nappe de renfort à angle à gauche 2_left (figure 3) ou au contraire une nappe de renfort à angle à droite 2_right (figure 4).

Selon l'invention, l'installation 1 comprend en outre un organe préhenseur 26 qui est agencé pour venir prélever une laize 5 sélectivement sur la première surface de réception 21 ou sur la seconde surface de réception 22 afin de permettre au poste d'aboutage 12 de constituer sélectivement une nappe de renfort 2, 2_left, 2_right à partir de laizes 5 orientées conformément à la première orientation ou, respectivement, à partir de laizes 5 orientées conformément à la seconde orientation.

Ainsi, tel que cela est illustré sur l'exemple de la figure 3, lorsqu'il faudra constituer une nappe de renfort à angle à gauche 2_left, l'organe préhenseur 26 pourra prélever successivement une pluralité de laizes 5 non retournées, mises à disposition par le poste de préparation 4 sur la première surface de réception 21 conformément à la première orientation.

Au contraire, lorsqu'il faudra constituer une nappe de renfort à angle à droite 2_right, tel que cela est illustré sur la figure 4, l'organe préhenseur 26 pourra prélever successivement sur la seconde surface de réception 22 une pluralité de laizes 5 retournées conformément à la seconde orientation, qui auront été successivement posées par le poste de préparation 4 sur la première surface de réception 21 puis retournées par transfert sur la seconde surface de réception 22.

Grâce au poste de retournement 20 selon l'invention, on pourra fabriquer indifféremment des nappes de renfort avec angle à gauche 2_left et des nappes de renfort correspondantes avec angle à droite 2_right, et ainsi disposer de l'ensemble des nappes de renfort 2_left, 2_right nécessaires à la constitution d'un bloc sommet avec nappes croisées, au moyen d'une seule et même installation 1, et ce sans qu'il soit nécessaire d'inverser la direction de coupe C10, c'est-à-dire sans qu'il soit nécessaire d'inverser le signe de l'angle de coupe au niveau de la coupeuse 10.

En particulier, si l'on considère une première variante d'application selon laquelle on doit confectionner, typiquement pour réaliser le bloc sommet d'un même bandage pneumatique, d'une part une première nappe de renfort avec angle à gauche 2_left et d'autre part une seconde nappe de renfort avec angle à droite 2_right dont l'angle de coupe A2 est exactement symétrique de l'angle de coupe A2 de la nappe de renfort avec angle à gauche 2_left, alors l'installation 1 selon l'invention permettra de passer d'un angle de nappe à gauche à un angle de nappe à droite, de même valeur mais de signe opposé, par simple retournement, sans qu'il soit nécessaire de reconfigurer l'angle de coupe de la coupeuse 10.

Selon une seconde variante d'application, on pourrait souhaiter superposer, pour former un bloc sommet, au moins une première nappe de renfort à gauche 2_left et une seconde nappe de renfort à droite 2_right, mais en utilisant des nappes 2_left, 2_right qui présenteraient, en valeur absolue, des angles de coupe A2 respectifs différents, c'est-à-dire des nappes de renfort non symétriques l'une de l'autre par rapport à leur direction longitudinale commune Z2.

Selon cette seconde variante d'application, l'installation 1 permettrait de passer alternativement de la confection de la première nappe de renfort 2_left à la confection de la seconde nappe de renfort 2_right simplement en opérant une légère réorientation de la coupeuse 10, de faible amplitude, sans changement de signe, c'est-à-dire sans changement d'orientation gauche/droite, par rapport à la direction longitudinale Z6 de la bande droit fil 6.

Avantageusement, l'ajustement d'orientation de la direction de coupe C10 portera alors en effet seulement sur la différence entre les valeurs absolues des deux angles de coupe A2 considérés, et non sur le choix du signe de l'angle de coupe A2 (et donc potentiellement sur une inversion du signe de l'angle de coupe A2), puisque le choix du signe de l'angle de coupe A2 est géré en aval de l'opération de coupe et relève du poste de retournement 20.

En effet, l'invention permet avantageusement, selon une caractéristique qui peut constituer une invention à part entière, de dissocier d'une part la définition de la valeur de l'angle de coupe, et donc de la valeur de l'angle de nappe A2, définition qui est opérée par la coupeuse 10, d'autre part du choix du signe de l'angle de coupe, et donc du signe de l'angle de nappe A2, choix qui est opéré ensuite par le poste de retournement 20, qui peut soit conserver le signe de l'angle de coupe défini par la coupeuse 10 en conservant la laize 5 sur la première surface de réception 21, soit inverser ce signe en retournant la laize 5, en la faisant passer ladite laize 5 sur la seconde surface de réception 22.

Selon la seconde variante d'application ci-dessus, on pourra donc avantageusement passer de la confection d'une nappe avec angle à gauche 2_left à la confection d'une nappe avec angle à droite 2_right en réalisant une chute minime de bande droit fil 6, bien moindre que la chute que l'on aurait produite si l'on avait dû inverser le signe de la direction de coupe C10, ce qui permettra d'économiser de la matière.

Les chutes de matière qui résultent d'un changement d'angle de coupe A2 pourront du reste être évacuées par l'organe préhenseur 26 vers un bac de récupération spécifique (non représenté).

On notera que, de préférence, la pose de laizes 5 par le poste de préparation 4 sur la première surface de réception 21 se fait individuellement, une laize après l'autre, chaque laize 5 qui passe par la première surface de réception 21 étant soit transférée directement vers le poste d'aboutage 12 soit retournée avant d'être transférée vers le poste d'aboutage 12, mais dans les deux cas de manière à libérer la première surface de réception 21 avant que le poste de préparation 4 n'apporte la laize 5 suivante sur ladite première surface de réception 21.

De même, on notera que, de préférence, le retournement des laizes 5 par le poste de retournement 20 se fera individuellement, laize après laize, chaque laize 5 retournée qui parvient à la seconde surface de réception 22 étant envoyée vers le poste d'aboutage 12 avant qu'une autre laize 5 ne vienne la remplacer sur ladite seconde surface de réception 22.

Le traitement individuel des laizes 5 permettra notamment d'utiliser un poste de retournement 20 compact et léger.

En outre, on pourra ainsi préparer progressivement la quantité de laizes 5 juste nécessaire et suffisante pour produire la nappe de renfort 2 à la longueur voulue, au plus près des besoins, sans gaspillage de matière.

De préférence, l'organe préhenseur 26 sera agencé pour pouvoir saisir et manipuler la laize 5 par la face apparente de ladite laize, telle que cette face apparente est sélectionnée et rendue accessible audit organe préhenseur 26 par le poste de retournement 20.

A ce titre, de préférence, et tel que cela est notamment visible sur les figures 1, 3 et 4, l'organe préhenseur 26 comprendra une semelle 27 qui est agencée pour venir s'appliquer au contact de la face apparente de la laize 5 qui est présente sur la première surface de réception 21 ou sur la seconde surface de réception 22, afin de prélever ladite laize 5 par sa face apparente et de transférer ladite laize 5 de la surface de réception 21, 22 qu'elle occupe vers le poste d'aboutage 12.

Selon que la laize 5 sera exposée sur la première surface de réception 21 ou aura été retournée pour être exposée sur la seconde surface de réception 22, la semelle 27, qui est mobile entre le poste de retournement 20 et le poste d'aboutage 12, viendra donc se poser sur la première face 5_1 de la laize 5, ou respectivement sur la seconde face 5_2 de la laize 5, afin de prélever ladite laize 5.

Avantageusement, la laize 5 étant prise en sandwich entre la semelle 27 et la surface de réception 21, 22 lors de la préhension, on assurera un maintien permanent de ladite laize 5, sur la majorité voire la totalité de l'étendue surfacique de la face apparente de ladite laize 5, ce qui évitera toute déformation de la laize 5, ou tout décalage de ladite laize 5 dans le ou les référentiels machine associés au poste de retournement 20 et au poste d'aboutage 12.

De préférence, la semelle 27 sera plane, afin d'assurer une qualité optimale de préhension.

De préférence, la semelle 27 sera aimantée, de sorte à pouvoir assurer une préhension magnétique de la laize 5.

Selon une possibilité préférentielle d'agencement de l'installation 1, l'organe préhenseur 26 du poste de retournement 20 est partagé avec le poste d'aboutage 12, tel que cela est illustré sur les figures 1, 3 et 4, de sorte que ledit organe préhenseur 26 puisse prélever une laize 5 sur la surface de réception 21, 22 que ladite laize 5 occupe puis directement déposer ladite laize 5 sur un tapis d'assemblage 13 du poste d'aboutage 12, en aboutant ladite laize 5 avec une laize 5 déjà présente sur ledit tapis d'assemblage 13.

L'installation 1 gagnera ainsi en compacité, ainsi qu'en précision, dans la mesure où il est possible de conserver un référentiel machine commun au poste de retournement 20 et au poste d'aboutage 12.

Les opérations de prélèvement, de préférence de prélèvement individuel, de laizes 5 sur la surface de réception 21, 22 qui correspond à l'orientation choisie d'une part, et d'aboutage sur le tapis d'assemblage 13 d'autre part, seront répétées autant de fois que nécessaire pour constituer la nappe de renfort 2 de la longueur voulue.

Typiquement, la longueur de la nappe de renfort 2 sera sensiblement, voire exactement, égale au périmètre circulaire du bloc sommet du bandage 3 pneumatique concerné, de sorte à ce que ladite nappe de renfort 2 puisse se refermer sur elle-même en anneau, par soudure de ses extrémités, autour de l'axe central dudit bandage pneumatique.

On notera par ailleurs que, de préférence, l'organe préhenseur 26 pourra être porté par un bras robotisé 28, préférentiellement un bras robotisé à six axes, tel que cela est visible sur les figures 1, 3 et 4.

L'utilisation d'un tel bras robotisé 28 assure la polyvalence et la dextérité dudit organe préhenseur 26, et notamment sa capacité à prélever et à abouter indifféremment des laizes 5 orientées selon la première orientation ou des laizes 5 orientées selon la seconde orientation, tout en limitant l'encombrement de l'organe préhenseur 26.

La semelle 27 pourra être engagée, en tant qu'outil terminal, sur le poignet du bras robotisé 28. Ceci permet notamment d'ajuster aisément l'orientation en azimut (en lacet) de la semelle 27, notamment par rapport au poste de retournement 20 et par rapport au tapis d'assemblage 13, en fonction de l'orientation qui aura été retenue pour présenter la laize 5 et pour intégrer la laize 5 à la nappe de renfort 2.

De préférence, la première surface de réception 21 et la seconde surface de réception 22 sont planes.

Un tel agencement facilite la pose de la laize 5 sur lesdites surfaces de réception 21, 22, et assure un maintien de bonne qualité, sans risque de déformation des laizes 5.

En outre, un tel agencement autorise un retournement par transfert à plat, au moyen d'un outillage basculant relativement simple et compact, tel que cela sera détaillé ci-après.

Selon une caractéristique préférentielle qui peut constituer une invention en tant que telle, la première surface de réception 21 est portée par un premier volet 31, tandis que la seconde surface de réception 22 est portée par un second volet 32 qui s'articule par rapport audit premier volet 31, selon un axe dit « axe de renversement » Z32, de sorte à pouvoir basculer par rapport audit premier volet 31 et ainsi alternativement se refermer sur le premier volet 31 ou s'ouvrir en s'écartant dudit premier volet 31.

Une telle structure à volets 31, 32 basculants est avantageusement simple et robuste. Elle permet en outre un maintien stable de la laize 5 durant tout le processus de pose de la laize 5 sur la première surface de réception 21, puis de retournement de ladite laize 5.

Le premier volet 31 est de préférence fixe, et par exemple solidaire du même bâti 33 que le bras robotisé 28 de l'organe de préhenseur 26, et/ou solidaire du même bâti 33 que le poste de préparation 4.

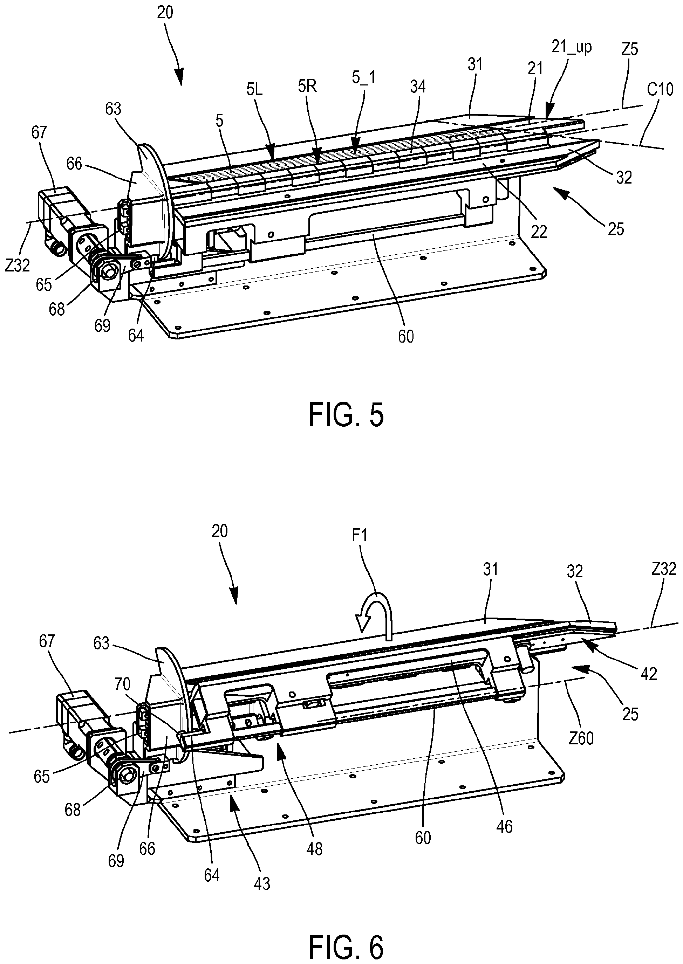

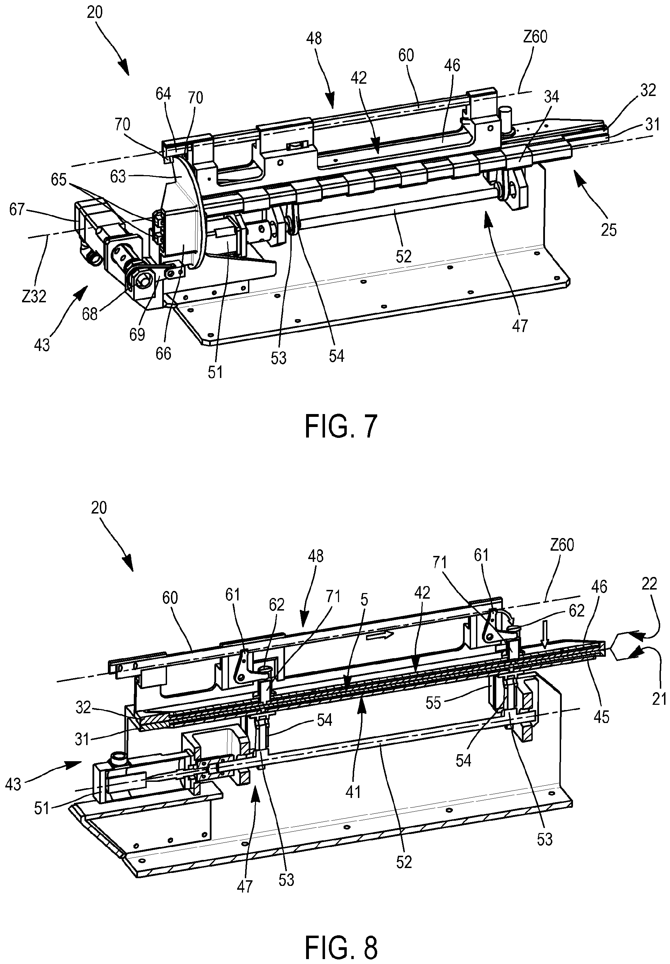

Pour opérer le retournement, le second volet 32, mobile, se referme (figure 6) sur le premier volet 31 et sur la première face 5_1 de la laize 5 pour prendre la laize 5 en sandwich (figure 7) entre d'une part la première surface de réception 21, portée par le premier volet 31, et d'autre part la seconde surface de réception 22 portée par le second volet 32, de manière à faire passer la laize 5 du premier volet 31 au second volet 32 (figure 8), puis le second volet 32 s'ouvre en s'écartant du premier volet 31 et en emportant avec lui la laize 5, de manière à exposer la seconde face 5_2 de la laize 5 (figure 10).

Bien entendu, on pourrait considérer en variantes, sans sortir du cadre de l'invention, une configuration de dispositif inverseur 25 dans laquelle le mouvement relatif de basculement d'un volet 32 par rapport à l'autre volet 31 serait assuré soit par un premier volet 31 qui serait mobile en basculement par rapport à un second volet 32 fixe, soit par un ensemble à deux volets mobiles, où chacun des premier et second volets 31, 32 serait mobile en basculement par rapport à un même bâti 33 et par rapport à l'autre volet 32, 31.

L'axe de renversement Z32 est de préférence matérialisé par une charnière 34 prévue entre le premier volet 31 et le second volet 32.

L'axe de renversement Z32 sera de préférence orienté parallèlement au plan de la première surface de réception 21, et parallèlement au plan de la seconde surface de réception 22.

Dans l'absolu, l'axe de renversement Z32 pourrait être orienté transversalement à la direction longitudinale des fils de renfort, et donc transversalement à la direction longitudinale Z5 de la laize 5, de sorte à permettre un retournement de la laize 5 en tangage.

Toutefois, de préférence, et tel que cela est notamment illustré sur les figures 1 à 7 et 10, l'axe de renversement Z32 sera orienté parallèlement à la direction longitudinale Z5 de la laize 5, de sorte à permettre un retournement de la laize 5 en roulis.

Un tel agencement présente en effet une meilleure compacité et une meilleure stabilité, grâce à un guidage plus étendu de la charnière 34 et à une moindre inertie des volets 31, 32 lors des mouvements du ou des volets 31, 32.

Le mouvement de basculement du second volet 32 pourra être conféré par un moteur de retournement 35, de préférence électrique, qui pourra venir en prise sur ledit second volet 32 par l'intermédiaire d'un couplage, par exemple par goupillage ou clavetage, entre l'arbre dudit moteur de retournement 35, qui peut faire office de gond pour la charnière 34, et ledit second volet 32.

Les volets 31, 32 pourront bien entendu être réalisés dans tout matériau rigide approprié, de préférence métallique.

Bien entendu, les première et seconde surfaces de réception 21, 22 seront agencées de manière à pouvoir exercer sur la laize 5 qui se trouve au contact de la surface de réception 21, 22 considérée une force attractive qui permet de retenir ladite laize 5 sur et contre ladite surface de réception 21, 22 considérée, afin d'assurer un maintien de ladite laize 5 dans une position fixe sur ladite surface de réception 21, 22 considérée, en particulier lors des mouvements de basculement du premier volet 31 et/ou du second volet 32.

De préférence, chacune des première et seconde surfaces de réception 21, 22 possède à cet effet son ou ses propres organes de maintien 41, 42, qui sont agencés pour, lorsqu'ils sont activés, attirer et plaquer la laize 5 contre la surface de réception 21, 22 considérée, et qui sont placés sous la dépendance d'un système de commande 43 qui pilote l'activation desdits organes de maintien 41, 42.

Plus particulièrement, le poste de retournement 20 comprend des premiers organes de maintien 41 associés à la première surface de réception 21 ainsi que des seconds organes de maintien 42 associés à la seconde surface de réception 22, ainsi qu'un système de commande permet 43 qui permet d'ajuster sélectivement l'activation, ou l'intensité d'activation, desdits organes de maintien 41, 42, de manière notamment à pouvoir conférer aux seconds organes de maintien 42, pour opérer le transfert de la laize 5 de la première surface de réception 21 à la seconde surface de réception 22, une force d'attraction plus élevée que la force d'attraction qui est exercée par les premiers organes de maintien 41.

Les organes de maintien 41, 42 pourront être de toute nature appropriée pour maintenir une laize 5 plaquée contre une surface de réception 21, 22.

Ainsi, dans l'absolu, on pourrait par exemple envisager des organes de maintien 41, 42 à dépression, de type ventouses. Toutefois, une telle solution présente l'inconvénient d'augmenter le temps nécessaire à l'activation des organes de maintien et, plus globalement, le temps de cycle de l'installation 1.

C'est pourquoi on pourra préférer, lorsque cela est compatible avec la nature des laizes 5 à manipuler, des organes de maintien 41, 42 magnétiques, à aimants permanents et/ou à électroaimants.

Selon un agencement préférentiel de l'invention, le ou les organes de maintien 41 associés à la première surface de réception 21, dits « premiers organes de maintien » 41, et/ou le ou les organes de maintien 42 associés à la seconde surface de réception 22, dits « seconds organes de maintien » 42, comprennent un aimant permanent 45, 46, respectivement un premier aimant permanent 45 et/ou un second aimant permanent 46, qui est monté mobile au dos de la surface de réception 21, 22 considérée.

Le système de commande 43 comprend alors de préférence un mécanisme de manoeuvre 47, 48 qui est agencé pour sélectivement rapprocher ou éloigner ledit aimant permanent 45, 46 de la surface de réception 21, 22 considérée afin de modifier la force magnétique d'attraction exercée au niveau de ladite surface de réception 21, 22 par ledit aimant permanent 45, 46.

Plus particulièrement, le système de commande 43 pourra ainsi être agencé de manière à créer, lors du transfert de la laize 5 nécessaire au retournement, une force d'attraction magnétique, dirigée vers la seconde surface de réception 22, qui soit plus élevée que la force magnétique qui tend à retenir cette même laize 5 au contact de la première surface de réception 21, dont on doit détacher la laize 5 à l'occasion dudit transfert.

De préférence, l'aimant permanent 45, 46 pourra prendre la forme d'une plaque aimantée, tel que cela est visible sur les figures 8 et 9.

Par commodité de description, on pourra assimiler aimant permanent 45, 46 et plaque aimantée dans ce qui suit.

De préférence, la plaque aimantée 45, 46 sera adossée, en épaisseur, à la surface de réception 21, 22 qui lui correspond.

Le dispositif inverseur 25 agencé pour faire passer la laize 5 de la première surface de réception 21 à la seconde surface de réception 22, tel que mentionné plus haut, pourra ainsi correspondre, selon une possibilité de mise en oeuvre de l'invention, à un sous-ensemble qui comprend le premier volet 31 portant la première surface de réception 21 et ses organes de maintien 41, le second volet 32 portant la seconde surface de réception 22 et ses organes de maintien 42, la charnière 34 permettant l'articulation du relative du second volet 32 par rapport au premier volet 31, le moteur de retournement 35, le système de commande 43 qui coordonne l'action des organes de maintien 41, 42, ainsi que les mécanismes de manoeuvre 47, 48 correspondants.

De préférence, le mécanisme de manoeuvre 47, 48 pourra comprendre un embiellage, qui permet de commander de manière alternative le rapprochement et, au contraire, l'éloignement, de la plaque aimantée 45, 46 par rapport à la surface de réception 21, 22 associée.

Ainsi, à titre d'exemple, un premier mécanisme de manoeuvre 47 qui sert à manoeuvrer le ou les premiers organes de maintien 41, et qui est associé à cet effet à la première surface de réception 21 pour piloter le positionnement de la première plaque aimantée 45 par rapport à ladite première surface de réception 21, et qui est de préférence monté à cet effet sur le premier volet 31, pourra comprendre, tel que cela est notamment visible sur les figures 8 et 9, un premier moteur de commande 51, de préférence électrique, qui est couplé à un arbre 52 pourvu d'au moins un premier organe d'excentrique 53 qui coopère avec une première bielle 54 liée à la première plaque aimantée 45.

De la sorte, lorsque le premier moteur de commande 51 fait exécuter à l'arbre 53 un demi-tour, il fait passer alternativement la première plaque aimantée 45, ici selon une course dirigée sensiblement perpendiculairement au plan de la première surface de réception 21, d'une première position la plus proche de la première surface de réception 21, à laquelle correspond la force d'attraction magnétique maximale, à une seconde position la plus éloignée de la première surface de réception 21, à laquelle correspond la force d'attraction magnétique minimale.

Bien entendu, l'organe d'excentrique 53 pourra prendre toute forme appropriée sans sortir du cadre de l'invention, telle que par exemple la forme d'un noyau d'excentrique, d'une came ou d'une manivelle.

Le cas échéant, la première plaque aimantée 45 pourra être guidée en translation, perpendiculairement au dos de la première surface de réception 21, par tout moyen approprié, par exemple au moyen de guides 55 (ici des guides verticaux 55 sur les figures 8 et 9) fixés sur le premier volet 31 et avec lesquels coopèrent des pattes fixées sur ladite première plaque aimantée 45.

Selon une caractéristique préférentielle qui peut constituer une invention en tant que telle, le (second) mécanisme de manoeuvre 48 qui sert à manoeuvrer le ou les seconds organes de maintien 42 associés au second volet 32, dit « second mécanisme de manoeuvre » 48, comprend, tel que cela est notamment illustré sur les figures 5 à 8 :
- d'une part une tige de manoeuvre 60 qui est embarquée sur le second volet 32 et montée de sorte à être mobile en translation selon un axe dit « axe de tige » Z60 parallèle à l'axe de renversement Z32, ladite tige de manoeuvre 60 étant agencée de telle sorte que ses déplacements en translation commandent les déplacements en éloignement/rapprochement du second aimant permanent 46 par rapport à la seconde surface de réception 22, par exemple en commandant le basculement d'au moins un levier 61 qui agit à son tour sur un poussoir 62 qui entraîne le second aimant permanent 46 en déplacement par rapport à la seconde surface de réception 22,
- d'autre part une portion 63 de collerette circulaire, qui s'étend perpendiculairement à l'axe de renversement Z32, dont la position en abscisse le long dudit axe de renversement Z32 est modifiable par le système de commande 43, et qui couvre autour dudit axe de renversement Z32 un secteur angulaire qui est au moins égal à une course angulaire dite « course angulaire utile » qui permet au second volet 32 de basculer par rapport au premier volet 31 de manière à opérer le retournement d'une laize 5,
- et enfin un curseur 64 qui est fixé à l'extrémité de la tige de manoeuvre 60 et qui coopère avec la portion de collerette 63 de telle manière que ledit curseur 64 se déplace le long de ladite portion de collerette 63 pour accompagner le basculement conjoint de la tige de manoeuvre 60 et du second volet 32 autour de l'axe de renversement Z32 tout en restant en prise avec ladite portion de collerette 63 quelle que soit la position angulaire du second volet 32 par rapport au premier volet 31 autour de l'axe de renversement Z32, le long de la course angulaire utile,
si bien qu'une modification de la position en abscisse de la portion de collerette 43 se transmet à la tige de manoeuvre 60 à travers ledit curseur 64 et permet ainsi d'ajuster la position du second aimant permanent 46 par rapport à la seconde surface de réception 22 portée par le second volet 32.

Avantageusement, un tel agencement permet au système de commande 43 de rester opérationnel sur toute la trajectoire du second volet 32, quelle que soit la position angulaire du second volet 32 par rapport au premier volet 31, et, en particulier, permet de déclencher l'activation du second organe de maintien 42 lorsque le second volet 32 se trouve rabattu contre le premier volet 31 pour transférer la laize sur ledit second volet 32, puis de conserver cette activation tandis que le second volet 32 s'ouvre, afin de maintenir la laize 5 pendant le basculement, puis, le cas échéant, une fois le second volet 32 ouvert, de désactiver le second organe de maintien 42 pour libérer la laize 5 de la seconde surface de réception 22, après que l'organe préhenseur 26 est venu en prise sur ladite laize 5 exposée sur ladite seconde surface de réception 22.

La course angulaire utile du second volet 32 sera typiquement comprise entre d'une part une première position angulaire, dite « position fermée », dans laquelle le second volet 32 est rabattu contre le premier volet 31, de sorte à appliquer la seconde surface de réception 22 sur la première face 5_1 de la laize 5, et d'autre part une seconde position angulaire, dite « position ouverte », dans laquelle le second volet 32 est suffisamment écarté du premier volet 31 pour rendre la laize 5, et plus particulièrement la seconde face 5_2 de la laize 5, accessible à l'organe préhenseur 26, sur la seconde surface de réception 22.

A titre indicatif, ladite course angulaire utile, et par conséquent le secteur angulaire couvert par la portion de collerette 63, sera de préférence compris entre 120 degrés et 240 degrés, et plus préférentiellement égale à 180 degrés à +/- 10 degrés.

De façon préférentielle, dans la position ouverte, la première surface de réception 21 et la seconde surface de réception 22 seront parallèles, et plus préférentiellement coplanaires, de sorte à faciliter la préhension de la laize 5 par l'organe préhenseur 26 indifféremment sur ladite première surface de réception 21 ou sur ladite seconde surface de réception 22.

La portion de collerette 63 pourra être montée mobile et guidée en translation le long de l'axe de renversement Z32 par tout système de guidage approprié, de préférence solidaire du bâti 33.

Par exemple, la portion de collerette 63 pourra à cet effet être portée par un chariot 66 qui coulisse le long d'un ou plusieurs rails de guidage 65, ici horizontaux, tel que cela est illustré sur la figure 7.

Le déplacement en translation de ladite collerette 63 pourra être piloté par tout moyen approprié, de préférence au moyen d'un second moteur de commande 67, de préférence électrique, qui pourra par exemple actionner un embiellage comprenant un second organe d'excentrique 68 coopérant avec une seconde bielle 69 couplée au chariot 66 qui porte la portion de collerette 63, tel que cela est notamment visible sur les figures 5 à 7 et 10.

On notera que l'emploi d'un embiellage, que ce soit pour le premier et/ou le second mécanisme de manoeuvre 47, 48, présente notamment l'avantage, outre d'offrir une bonne robustesse intrinsèque, de permettre un actionnement rapide et précis, compte-tenu de la faible course qui est nécessaire à, et suffisante pour, l'activation des organes de maintien 41, 42 correspondants.

En outre, un tel embiellage est bien adapté à un fonctionnement réversible bistable, qui permet de commuter facilement entre un état activé et un état désactivé de l'organe de maintien 41, 42 concerné, et de conserver ledit organe de maintien 41, 42 dans l'état sélectionné jusqu'à la prochaine commutation d'état.

La seconde plaque aimantée 46 pourra être guidée en translation perpendiculairement à la seconde surface de réception 22 par tout moyen approprié, et par exemple au moyen de doigts de guidage 71 sur lesquels coulissent les poussoirs 62, tel que cela est illustré sur la figure 8. Les poussoirs 62 pourront à ce titre présenter un fût cylindrique creux sensiblement conjugué au doigt de guidage 71 correspondant, sur et autour duquel ledit poussoir 62 peut ainsi s'engager et glisser.

Le curseur 64 pourra de préférence se présenter sous la forme d'une fourche, dont les branches s'étendront de part et d'autre de l'épaisseur de la portion de collerette 63, de sorte à pouvoir transmettre des efforts aussi bien en traction qu'en compression.

Lesdites branches pourront par exemple porter des galets 70 agencés pour rouler sur les faces de la collerette 63 qui est ainsi pincée entre lesdites branches, tel que cela est illustré sur la figure 7.

Le ou les leviers 61 basculants pourront par ailleurs présenter une forme coudée, par exemple sensiblement en L, de sorte à former un renvoi d'angle compact entre la tige de manoeuvre 60 et les poussoirs 62.

On notera que, dans l'absolu, on pourrait envisager d'appliquer le principe d'une commande de mouvement qui utilise une portion de collerette 63, un curseur 64 et une tige de manoeuvre 60 tels que décrits ci-dessus, à une variante de réalisation qui associerait cette commande à un mécanisme de transmission autre qu'un système de levier 61/poussoir 62, par exemple à un système à rampes. Ceci étant, l'utilisation de leviers 61 basculants permet avantageusement de bénéficier d'un système particulièrement réactif, compact, qui offre une bonne amplitude de course pour la seconde plaque aimantée 46.

De préférence, la première surface de réception 21 et, respectivement, la seconde surface de réception 22, présentent chacune une étendue égale ou supérieure à 90%, et préférentiellement égale ou supérieure à 100%, de l'étendue de la première face 5_1 de la laize 5 à retourner.

La seconde face 5_2 de la laize ayant de préférence la même forme et la même étendue que la première face 5_1, la première surface de réception 21 et, respectivement, la seconde surface de réception 22, présentent donc (aussi) de préférence chacune une étendue égale ou supérieure à 90%, et préférentiellement égale ou supérieure à 100%, de l'étendue de la seconde face 5_2 de la laize 5 à retourner.

En tout état de cause, un tel agencement permet d'offrir un appui à ladite laize 5 sur la majorité, et de préférence sur la totalité, ou la quasi-totalité, de sa première face 5_1, respectivement sur la majorité, de préférence sur l'ensemble la totalité, ou la quasi-totalité, de sa seconde face 5_2.

Avantageusement, en permettant ainsi à chaque surface de réception 21, 22 de contenir entièrement ou quasi-entièrement la laize 5, on assure un soutien et une retenue stable et bien répartie de la laize 5, qui évite toute déformation accidentelle.

Par ailleurs, le poste de retournement 20 sera de préférence agencé pour réaliser un retournement individuel de laize 5, et ainsi pour traiter chaque laize 5 une par une, avant l'aboutage de la laize 5 concernée.

Plus particulièrement, chacune des première et seconde surfaces de réception 21, 22 pourra être dimensionnée de sorte à pouvoir accueillir au plus une laize 5 entière.

Ceci permettra notamment de conserver une installation 1 relativement compacte, et des éléments mobiles plus légers.

On notera également que la coupe s'effectue de préférence en-dehors de la première surface de réception 21, c'est-à-dire que la coupeuse 10 est agencée pour que la trajectoire de la lame 11 n'interfère pas avec ladite première surface de réception 21.

A cet effet, la coupeuse 10, et plus particulièrement la lame 11 et l'enclume 14, sont de préférence disposées à distance de ladite première surface de réception 21, dans la direction longitudinale Z6 de la bande droit fil 6, à proximité immédiate du rebord, ici le rebord amont 21_up, de la première surface de réception 21.

Ledit rebord amont 21_up de la première surface de réception 21, et plus particulièrement du premier volet 31, pourra présenter une forme biseautée, tel que cela est visible sur les figures 3, 4, 5 et 10, dont l'orientation correspondra de préférence à un angle moyen représentatif de la moyenne des angles de coupe A2 les plus communément mis en oeuvre. De la sorte, la direction de coupe C10 sera généralement sensiblement parallèle audit rebord amont 21_up.

Dans l'absolu, on pourrait envisager de réaliser un mouvement complémentaire du transporteur 23, après que la laize 5 aura été coupée, de sorte à recentrer sur la première surface de réception 21 ladite laize 5 dont l'extrémité dépasse initialement, au moment où s'achève la coupe, légèrement de ladite première surface de réception 21.

Un tel recentrage permettrait en effet de repositionner ladite laize 5 en totalité sur la première surface de réception 21 après la coupe, avant d'activer le premier organe de maintien 41 en vue du transfert de la laize 5 du transporteur 23 au premier volet 31.

Toutefois, dans la mesure où, en position de coupe, la laize 5 est en pratique maintenue efficacement sur la grande majorité de sa surface, typiquement sur plus de 80%, plus de 90%, voire plus de 95% de l'étendue de sa première face 5_1, il n'est pas forcément utile de procéder à un tel recentrage.

De préférence, on pourra donc procéder au transfert sur le premier volet 31 puis au retournement directement, sans effectuer un tel recentrage.

Ceci permettra notamment de simplifier les mouvements du transporteur 23.

Bien entendu, l'invention porte également en tant que telle sur un dispositif inverseur 25 destiné au retournement de laize 5.

Un tel dispositif inverseur 25 peut notamment se présenter sous la forme d'un sous-ensemble qui permet de doter une installation, le cas échéant une installation de préparation-aboutage déjà existante, d'un poste de retournement 20 selon l'une ou l'autre des caractéristiques décrites dans ce qui précède.

De préférence, l'invention peut ainsi concerner un dispositif inverseur 25 destiné à retourner une laize 5, qui est délimitée en épaisseur par une première face 5_1 et par une seconde face 5_2 opposée à ladite première face 5_1.

Ledit dispositif inverseur 25 comprend un premier volet 31 qui porte une première surface de réception 21 agencée pour recevoir une laize 5, ainsi qu'un second volet 32 qui porte une seconde surface de réception 22 et qui s'articule par rapport audit premier volet 31 selon un axe dit « axe de renversement » Z32, de sorte à pouvoir basculer par rapport audit premier volet 31 et ainsi alternativement soit se refermer sur le premier volet 31 soit s'ouvrir en s'écartant dudit premier volet 31.

Le premier volet 31 dudit dispositif inverseur 25 comporte en outre un premier organe de maintien 41 agencé pour, lorsqu'il est activé, attirer et plaquer la laize 5 contre la première surface de réception 21, tandis que le second volet 32 comporte un second organe de maintien 42 agencé pour, lorsqu'il est activé, attirer et plaquer la laize 5 contre la seconde surface de réception 22.

Enfin, les premier et second organes de maintien 41, 42 sont placés sous la dépendance d'un système de commande 43 qui pilote leur activation.

De cette manière, le dispositif inverseur 25 peut réaliser un retournement d'une laize 5, qui initialement repose et est maintenue sur la première surface de réception 21 du premier volet 31 conformément à une première orientation (figure 5), en actionnant tout d'abord le second volet 32 dans un premier sens de basculement F1, dit « sens de fermeture », autour de l'axe de renversement Z32 (figure 6), de sorte à rabattre le second volet 32 sur le premier volet 31 et à amener la seconde surface de réception 22 au contact de la première face 5_1 de la laize 5 (figures 7 et 8), puis en activant le second organe de maintien 42 (figure 8) de sorte à attirer et maintenir la laize 5 contre la seconde surface de réception 22, puis en actionnant le second volet 32 dans un second sens de basculement F2, dit « sens d'ouverture », opposé au premier sens de basculement F1, de manière à écarter le second volet 32 du premier volet 31 pour que ledit second volet 32 emporte ainsi, sur sa seconde surface de réception 22, la laize 5 orientée selon une seconde orientation, inverse de la première orientation (figure 10).

De préférence, pour conserver un maintien de la laize 5 pendant toute l'opération de retournement, le système de commande 43 sera conçu pour coordonner le fonctionnement des organes de maintien 41, 42 de telle sorte que, après que la seconde surface de réception 22 est venue se placer contre la première face 5_1 de la laize 5 en vue du transfert, le second organe de maintien 42 est activé avant que le premier organe de maintien 41 soit totalement désactivé.

Plus spécifiquement, le système de commande 43 sera de préférence conçu pour successivement, une fois que le second volet 32 s'est refermé sur le premier volet 31 :
- activer le second organe de maintien 42 en déclenchant le second moteur de commande 67 pour provoquer, via la rotation du second organe d'excentrique 68, la translation de la portion de collerette 63 et par conséquent de la tige de manoeuvre 60 (ici par une poussée vers la droite sur la figure 8) et, concomitamment, le basculement (ici dans le sens horaire sur la figure 8) des leviers 61, de manière à rapprocher la seconde plaque aimantée 46 de la seconde surface de réception 22 (ici selon un mouvement dirigé vers le bas, sur la figure 8), puis
- désactiver le premier organe de maintien 41 en déclenchant le premier moteur de commande 51 pour provoquer, via la rotation du premier organe d'excentrique 53, un mouvement de recul de la première plaque aimantée 45 par rapport à la première surface de réception 21 (ici un mouvement vers le bas sur les figures 8 et 9).

On notera que, grâce à la portion de collerette 63 et au curseur 64 qui permettent de modifier, et surtout de verrouiller l'état (activé ou désactivé) du second organe de maintien 42 quelle que soit la position angulaire du second volet 32 par rapport au premier volet 31, on peut conserver le second organe de maintien 42 actif pendant toute l'opération d'ouverture du second volet 32 et ce jusqu'à ce que la laize 5 soit ensuite prélevée, sur la seconde surface de réception 22, par l'organe préhenseur 26, en vue d'être aboutée.

Le second organe de maintien 42 pourra être désactivé une fois la laize 5 saisie par la semelle 27 de l'organe préhenseur 26, afin de libérer la laize 5 et d'autoriser son transfert jusqu'au poste d'aboutage 12.

Cette désactivation du second organe de maintien 42 pourra être effectuée en poursuivant la rotation du second moteur de commande 67 afin de renvoyer le second organe d'excentrique 68 vers l'arrière et ainsi tirer le chariot 66, la portion de collerette 63 et la tige de manoeuvre 60 (ici vers la gauche sur les figures 5 à 8 et 10) de sorte à rappeler les leviers 61 pour éloigner la seconde plaque aimantée 46 de la seconde surface de réception 22.

L'invention porte également sur un procédé de fabrication de nappe de renfort 2, 2_left, 2_right incluant une opération de retournement de laize 5 selon l'invention.

Ce procédé permet avantageusement de choisir, pour une laize 5 disponible donnée, issue d'une coupe effectuée selon un angle de coupe déterminé, de présenter sélectivement ladite laize 5 à l'aboutage soit dans une première orientation, correspondant à l'orientation issue telle quelle de la coupe, soit dans une seconde orientation, retournée, qui est symétrique de la première orientation et non superposable avec la première orientation (du fait que, suite au retournement, l'angle de biseau apparent de la laize 5 retournée est inversé par rapport à l'angle de biseau apparent qui résulte de la coupe originale).

Plus particulièrement, l'invention porte sur un procédé de fabrication de nappe de renfort 2, 2_left, 2_right qui comprend :
- une étape (a) de préparation d'une laize au cours de laquelle on réalise une laize 5 en découpant une bande dite « bande droit fil » 6 qui est formée d'une pluralité de fils de renfort 7 qui sont noyés dans au moins une couche de gomme 8 et qui s'étendent parallèlement entre eux selon la direction longitudinale Z6 de ladite bande droit fil 6,
- une étape (c) d'aboutage au cours de laquelle on aboute ladite laize 5, par l'une de ses lisières 5R, 5L, à une autre laize 5 de sorte à former une nappe de renfort 2, 2_left, 2_right.

Selon l'invention, ledit procédé comporte, entre l'étape (a) de préparation de laize et l'étape (c) d'aboutage, une étape (b) de retournement de laize au cours de laquelle :
- on place sur une première surface de réception 21 la laize 5, qui est délimitée en épaisseur par une première face 5_1 et par une seconde face 5_2 opposée à ladite première face, de telle manière que ladite laize repose et est maintenue sur ladite première surface de réception 21 par sa seconde face 5_2, et présente sa première face 5_1 en tant que face apparente, selon une première orientation,
- puis on retourne la laize 5 en transférant ladite laize 5 depuis la première surface de réception 21 jusqu'à une seconde surface de réception 22, de telle manière que ladite laize 5 se retrouve maintenue contre la seconde surface de réception 22 par sa première face 5_1, et présente sa seconde face 5_2 en tant que face apparente, selon une seconde orientation inverse de la première,
- on prélève sur la seconde surface de réception 22 la laize 5 retournée, afin de transporter ladite laize retournée jusqu'à une surface d'assemblage 13 où l'on aboute ladite laize 5 conformément à la seconde orientation.

On pourra bien entendu utiliser un organe préhenseur 26 tel que décrit plus haut pour détacher la laize 5 retournée de la seconde surface de réception 22 et l'acheminer sur la surface d'assemblage 13.

Tel que cela a été décrit plus haut, ledit organe préhenseur 26 sera avantageusement agencé de manière à pouvoir coopérer sélectivement soit avec la première surface de réception 21, soit avec la seconde surface de réception 22, et ce de manière à pouvoir, en fonction de l'orientation voulue pour la nappe de renfort 2, prélever la laize 5 sur la surface de réception 21, 22 qui correspond à ladite orientation voulue.

Le procédé comprendra donc une étape de configuration sélective, dans laquelle on spécifiera à l'organe préhenseur 26, de préférence automatiquement, sur quelle surface de réception 21, 22, parmi la première surface de réception 21 et la seconde surface de réception 22, ledit organe préhenseur 26 doit prélever la laize 5, en fonction de l'orientation voulue pour la nappe de renfort 2 en cours de fabrication.

Cette étape de configuration sélective comprendra de préférence également une phase au cours de laquelle on modifiera l'orientation en azimut de la semelle 27 de l'organe préhenseur 26, afin d'adapter ladite orientation en azimut à celle de la laize 5 et à l'angle de nappe A2 visé, et plus particulièrement afin d'adapter l'orientation en azimut de la semelle 27 au signe de l'angle de nappe A2 visé.

Bien entendu, l'invention n'est nullement limitée aux seules variantes de réalisation susmentionnées, l'homme du métier étant notamment à même d'isoler ou de combiner librement l'une ou l'autre des caractéristiques décrites dans ce qui précède ou de leur substituer un équivalent.

Ainsi, par exemple, on pourrait remplacer les moteurs électriques de retournement 35 et/ou de commande 51, 67 par des moteurs pneumatiques.

Par ailleurs, on notera que l'on pourra avantageusement utiliser l'installation 1 et le procédé selon l'invention pour réaliser une préparation dite « intégrée » de nappes de renfort 2, c'est-à-dire pour réaliser une préparation à l'unité de nappes de renfort 2 au sein d'une machine de fabrication de bandages pneumatiques, de manière à ce que ladite machine puisse utiliser lesdites nappes de renfort 2 au fur et à mesure de leur production par l'installation 1, en transférant et en posant directement lesdites nappes 2 les unes après les autres, sitôt que chaque nappe 2 est prête, sur un tambour cylindrique de confection de bloc-sommet ou bien sur un noyau torique dont la forme correspond à celle du bandage pneumatique 3 à obtenir.

De préférence, pour une telle préparation intégrée, on réalisera alternativement, à chaque cycle, d'une part une nappe de renfort à angle à gauche 2_left et d'autre part une nappe de renfort à angle à droite 2_right, lesdites nappes étant toutes deux destinées à un même bloc sommet, de manière à ce que chaque nappe 2_left, 2_right soit prélevée à son tour, juste après avoir été confectionnée, sur le tapis d'assemblage 13, pour être posée sur le tambour de confection ou le noyau toroïdal correspondant.

On notera également que l'installation 1 utilise de préférence une seule et même surface d'assemblage 13, ici un seul et même tapis d'assemblage 13, pour confectionner, tour à tour, les différents types de nappes de renfort 2, à savoir aussi bien les nappes de renfort conformes à la première orientation, ici des nappes de renfort à gauche 2_left, que les nappes de renfort conformes à la seconde orientation, à savoir les nappes de renfort à droite 2_right.

Avantageusement, le même organe préhenseur 26 pourra venir prélever des laizes 5 soit sur la première surface de réception 21, soit sur la seconde surface de réception 22, selon l'orientation voulue pour la nappe de renfort 2, et amener systématiquement ces laizes 5 sur une seule et même surface d'assemblage 13, où ledit organe préhenseur 26 procède à l'aboutage et ainsi à la constitution de la nappe de renfort 2 selon l'orientation choisie.

Un tel partage d'une même surface d'assemblage 13, et d'un même organe préhenseur 26, qui interviennent en aval des première et seconde surface de réception 21, 22, pour réaliser indifféremment aussi bien des nappes de renfort à gauche 2_left que des nappes de renfort à droite 2_right, permet avantageusement de mutualiser les moyens d'aboutage, et ainsi d'utiliser un seul et même poste d'aboutage 12, simple et peu encombrant.

Plus globalement, dans la mesure où l'installation 1 permet d'utiliser, quelle que soit l'orientation voulue pour la nappe de renfort 2 à fabriquer, tout d'abord une même coupeuse 10 partagée, située en amont du poste de retournement 20, poste de retournement 20 qui est lui-même chargé d'orienter les laizes 5, puis ensuite un même organe préhenseur 26 partagé et une même surface d'assemblage 13 partagée, situés en aval de ce même poste de retournement 20, afin d'abouter les laizes 5 et ainsi former ladite nappe de renfort 2, il est possible d'éviter toute redondance des postes constitutifs de ladite installation 1, ce qui en limite considérablement l'encombrement.

Par ailleurs, l'absence de reconfiguration de l'installation 1, ou la faible amplitude de la reconfiguration de l'installation 1, nécessaire pour passer d'une nappe de renfort à angle gauche 2_left à une autre nappe de renfort à angle à droite 2_right permet de produire rapidement chaque jeu de nappes 2_left, 2_right, typiquement chaque jeu de deux nappes 2_left, 2_right présentant des angles de nappe A2 de signes opposés, sans pénaliser le temps de cycle de la machine qui est chargée de prélever successivement lesdites nappes 2_left, 2_right sur le tapis d'assemblage 13 pour les transférer et les superposer l'une sur l'autre, sur le tambour de confection ou le noyau toroïdal.

En outre, la compacité et le faible coût de l'installation 1 favoriseront bien entendu son implantation, pour un coût d'investissement moindre, dans de tels processus de préparation intégrée.

Enfin, on notera que l'on pourrait appliquer plus généralement le principe du retournement selon l'invention, et notamment faire usage d'un dispositif inverseur 25, pour tout type de produit plat assimilable à une laize 5, et ce éventuellement quelle que soit la forme ou la composition dudit produit plat ou plus particulièrement de ladite laize.

## Revendications

1. Installation (1) de fabrication d'une nappe de renfort (2, 2_left, 2_right), ladite installation comprenant :
- un poste de préparation (4) qui est agencé pour préparer des laizes (5) par découpe d'une bande dite « bande droit fil » (6) qui est formée d'une pluralité de fils de renfort (7) qui sont noyés dans au moins une couche de gomme (8) et qui s'étendent parallèlement entre eux selon la direction longitudinale (Z6) de ladite bande droit fil (6),
- un poste d'aboutage (12) agencé pour abouter successivement, par leurs lisières (5L, 5R), les laizes (5) issues du poste de préparation (4), de sorte à former une nappe de renfort (2, 2_left, 2_right),
- un poste (20) de retournement de laize, qui est interposé entre le poste de préparation (4) et le poste d'aboutage (12) et qui comporte :
- une première surface de réception (21), agencée pour recevoir une laize (5) préparée par le poste de préparation (4) et pour maintenir ladite laize (5) selon une première orientation dans laquelle ladite laize (5), qui est délimitée en épaisseur par une première face (5_1) et par une seconde face (5_2) opposée à ladite première face (5_1), repose et est maintenue sur ladite première surface de réception (21) par sa seconde face (5_2), et présente sa première face (5_1) en tant que face apparente,
- une seconde surface de réception (22) associée à un dispositif inverseur (25) qui est agencé pour faire passer une laize (5), initialement posée et maintenue sur la première surface de réception (21), de ladite première surface de réception (21) à ladite seconde surface de réception (22), en opérant ainsi un renversement de la laize (5) de sorte à conférer à ladite laize (5) une seconde orientation, inverse de la première orientation, dans laquelle ladite laize (5) se retrouve maintenue contre la seconde surface de réception (22) par sa première face (5_1), et présente sa seconde face (5_2) en tant que face apparente,
ladite installation (1) étant **caractérisée en ce qu'**elle comprend
- un organe préhenseur (26) agencé pour venir prélever une laize (5) sélectivement sur la première surface de réception (21) ou sur la seconde surface de réception (22) afin de permettre au poste d'aboutage (12) de constituer sélectivement une nappe de renfort (2, 2_left, 2_right) à partir de laizes (5) orientées conformément à la première orientation ou, respectivement, conformément à la seconde orientation.

2. Installation selon la revendication 1 **caractérisée en ce que** la première surface de réception 21 et la seconde surface de réception 22 sont planes.

3. Installation selon la revendication 1 ou 2 **caractérisée en ce que** la première surface de réception (21) est portée par un premier volet (31), tandis que la seconde surface de réception (22) est portée par un second volet (32) qui s'articule par rapport audit premier volet (31), selon un axe dit « axe de renversement » (Z32), de sorte à pouvoir basculer par rapport audit premier volet (31) et ainsi alternativement se refermer sur le premier volet (31) ou s'ouvrir en s'écartant dudit premier volet (31).

4. Installation selon l'une des revendications précédentes **caractérisée en ce que** chacune des première et seconde surfaces de réception (21, 22) possède son ou ses propres organes de maintien (41, 42), qui sont agencés pour, lorsqu'ils sont activés, attirer et plaquer la laize (5) contre la surface de réception (21, 22) considérée, et qui sont placés sous la dépendance d'un système de commande (43) qui pilote l'activation desdits organes de maintien (41, 42).

5. Installation selon la revendication 4 **caractérisée en ce que** le ou les organes de maintien (41) associés à la première surface de réception (21), dits « premiers organes de maintien » (41), et/ou le ou les organes de maintien (42) associés à la seconde surface de réception (22), dits « seconds organes de maintien » (42), comprennent un aimant permanent (45, 46), respectivement un premier aimant permanent (45) et/ou un second aimant permanent (46), de préférence sous forme d'une plaque aimantée, qui est monté mobile au dos de la surface de réception (21, 22) considérée, et **en ce que** le système de commande (43) comprend un mécanisme de manoeuvre (47, 48) agencé pour sélectivement rapprocher ou éloigner ledit aimant permanent (45, 46) de la surface de réception (21, 22) considérée afin de modifier la force magnétique d'attraction exercée au niveau de ladite surface de réception (21, 22) par ledit aimant permanent (45, 46).

6. Installation selon les revendications 3 et 5 **caractérisée en ce que** le mécanisme de manoeuvre (48) qui sert à manoeuvrer le ou les seconds organes de maintien (42) associés au second volet (32) comprend :
- d'une part une tige de manoeuvre (60) qui est embarquée sur le second volet (32) et montée de sorte à être mobile en translation selon un axe dit « axe de tige » (Z60) parallèle à l'axe de renversement (Z32), ladite tige de manoeuvre (60) étant agencée de telle sorte que ses déplacements en translation commandent les déplacements en éloignement/rapprochement du second aimant permanent (46) par rapport à la seconde surface de réception (22), par exemple en commandant le basculement d'au moins un levier (61) qui agit à son tour sur un poussoir (62) qui entraîne le second aimant permanent (46) en déplacement par rapport à la seconde surface de réception (22),
- d'autre part une portion (63) de collerette circulaire, qui s'étend perpendiculairement à l'axe de renversement (Z32), dont la position en abscisse le long dudit axe de renversement (Z32) est modifiable par le système de commande (43), et qui couvre autour dudit axe de renversement (Z32) un secteur angulaire qui est au moins égal à une course angulaire dite « course angulaire utile » qui permet au second volet (32) de basculer par rapport au premier volet (31) de manière à opérer le retournement d'une laize (5),
- et enfin un curseur (64) qui est fixé à l'extrémité de la tige de manoeuvre (60) et qui coopère avec la portion de collerette (63) de telle manière que ledit curseur (64) se déplace le long de ladite portion de collerette (63) pour accompagner le basculement conjoint de la tige de manoeuvre (60) et du second volet (32) autour de l'axe de renversement (Z32) tout en restant en prise avec ladite portion de collerette (63) quelle que soit la position angulaire du second volet (32) par rapport au premier volet (31) autour de l'axe de renversement (Z32), le long de la course angulaire utile,
si bien qu'une modification de la position en abscisse de la portion de collerette (63) se transmet à la tige de manoeuvre (60) à travers ledit curseur (64) et permet ainsi d'ajuster la position du second aimant permanent (46) par rapport à la seconde surface de réception (22) portée par le second volet (32).

7. Installation selon l'une des revendications précédentes **caractérisée en ce que** l'organe préhenseur (26) comprend une semelle (27), de préférence aimantée, qui est agencée pour venir s'appliquer au contact de la face apparente de la laize (5) qui est présente sur la première surface de réception (21) ou sur la seconde surface de réception (22), afin de prélever ladite laize (5) par sa face apparente et de transférer ladite laize (5) de la surface de réception (21, 22) qu'elle occupe vers le poste d'aboutage (12).

8. Installation selon l'une des revendications précédentes **caractérisée en ce que** l'organe préhenseur (26) du poste de retournement (20), de préférence porté par un bras robotisé (28) à six axes, est partagé avec le poste d'aboutage (12), de sorte que ledit organe préhenseur (26) puisse prélever une laize (5) sur la surface de réception (21, 22) que ladite laize (5) occupe puis directement déposer ladite laize (5) sur un tapis d'assemblage (13) du poste d'aboutage (12), en aboutant ladite laize (5) avec une laize (5) déjà présente sur ledit tapis d'assemblage (13).

9. Installation selon l'une des revendications précédentes **caractérisée en ce que** la première surface de réception (21) et, respectivement, la seconde surface de réception (22), présentent chacune une étendue égale ou supérieure à 90%, et préférentiellement égale ou supérieure à 100%, de l'étendue de la première face (5_1) de la laize (5) à retourner.

10. Installation selon l'une des revendications précédentes **caractérisée en ce que** le dispositif inverseur (25) comprend un premier volet (31) qui porte la première surface de réception (21) agencée pour recevoir une laize (5), ainsi qu'un second volet (32) qui porte la seconde surface de réception (22) et qui s'articule par rapport audit premier volet (31) selon un axe dit « axe de renversement » (Z32), de sorte à pouvoir basculer par rapport audit premier volet (31) et ainsi alternativement soit se refermer sur le premier volet (31) soit s'ouvrir en s'écartant dudit premier volet (31), **en ce que** le premier volet (31) comporte en outre un premier organe de maintien (41) agencé pour, lorsqu'il est activé, attirer et plaquer la laize (5) contre la première surface de réception (21), tandis que le second volet (32) comporte un second organe de maintien (42) agencé pour, lorsqu'il est activé, attirer et plaquer la laize (5) contre la seconde surface de réception (22), et **en ce que** les premier et second organes de maintien (41, 42) sont placés sous la dépendance d'un système de commande (43) qui pilote leur activation, de telle manière que le dispositif inverseur (25) peut réaliser un retournement d'une laize (5), qui initialement repose et est maintenue sur la première surface de réception (21) du premier volet (31) conformément à la première orientation, en actionnant tout d'abord le second volet (32) dans un premier sens de basculement, dit « sens de fermeture » (F1), autour de l'axe de renversement (Z32), de sorte à rabattre le second volet (32) sur le premier volet (31) et à amener la seconde surface de réception (22) au contact de la première face (5_1) de la laize (5), puis en activant le second organe de maintien (42) de sorte à attirer et maintenir la laize (5) contre la seconde surface de réception (22), puis en actionnant le second volet (32) dans un second sens de basculement, dit « sens d'ouverture » (F2), opposé au premier sens de basculement (F1), de manière à écarter le second volet (32) du premier volet (31) pour que ledit second volet (32) emporte ainsi, sur sa seconde surface de réception (22), la laize (5) orientée selon la seconde orientation, inverse de la première orientation.

11. Procédé de fabrication de nappe de renfort (2, 2_left, 2_right) comprenant :
- une étape (a) de préparation d'une laize au cours de laquelle on réalise une laize (5) en découpant une bande dite « bande droit fil » (6) qui est formée d'une pluralité de fils de renfort (7) qui sont noyés dans au moins une couche de gomme (8) et qui s'étendent parallèlement entre eux selon la direction longitudinale (Z6) de ladite bande droit fil (6),
- une étape (c) d'aboutage au cours de laquelle on aboute ladite laize (5), par l'une de ses lisières (5R, 5L), à une autre laize (5) de sorte à former une nappe de renfort (2, 2_left, 2_right),
ledit procédé étant **caractérisé en ce qu'**il comporte, entre l'étape (a) de préparation de laize et l'étape (c) d'aboutage, une étape (b) de retournement de laize au cours de laquelle :
- on place sur une première surface de réception (21) la laize (5), qui est délimitée en épaisseur par une première face (5_1) et par une seconde face (5_2) opposée à ladite première face (5_1), de telle manière que ladite laize (5) repose et est maintenue sur ladite première surface de réception (21) par sa seconde face (5_2), et présente sa première face (5_1) en tant que face apparente, selon une première orientation,
- puis on retourne la laize (5) en transférant ladite laize depuis la première surface de réception (21) jusqu'à une seconde surface de réception (22), de telle manière que ladite laize (5) se retrouve maintenue contre la seconde surface de réception (22) par sa première face (5_1), et présente sa seconde face (5_2) en tant que face apparente, selon une seconde orientation inverse de la première,
- on prélève sur la seconde surface de réception (22) la laize (5) retournée, au moyen d'un organe préhenseur (26) qui est agencé de manière à pouvoir coopérer sélectivement soit avec la première surface de réception (21), soit avec la seconde surface de réception (22), afin de transporter ladite laize retournée jusqu'à une surface d'assemblage (13) où l'on aboute ladite laize (5) conformément à la seconde orientation.

## Patentansprüche

1. Anlage (1) zur Herstellung einer Verstärkungslage (2, 2_left, 2_right), die Anlage umfassend:
- eine Vorbereitungsstation (4), die dafür angeordnet ist, Bahnstücke (5) durch Zuschnitt eines "Geradbands" (6) vorzubereiten, das von einer Mehrzahl von Verstärkungsfäden (7) gebildet ist, die in wenigstens eine Gummischicht (8) eingebettet sind und sich zueinander parallel in der Längsrichtung (Z6) des Geradbands (6) erstrecken,
- eine Fügestation (12), die dafür angeordnet ist, die Bahnstücke (5) aus der Vorbereitungsstation (4) nacheinander an ihren Kanten (5L, 5R) aneinanderzufügen, um eine Verstärkungslage (2, 2_left, 2_right) zu bilden,
- eine Bahnstück-Wendestation (20), die zwischen der Vorbereitungsstation (4) und der Fügestation (12) angeordnet ist und Folgendes aufweist:
- eine erste Aufnahmefläche (21), die dafür angeordnet ist, ein von der Vorbereitungsstation (4) vorbereitetes Bahnstück (5) aufzunehmen und das Bahnstück (5) in einer ersten Ausrichtung zu halten, in der das Bahnstück (5), das in der Dicke durch eine erste Seite (51) und durch eine zweite Seite (5_2), die der ersten Seite (51) gegenüberliegt, begrenzt ist, mit seiner zweiten Seite (5_2) auf der ersten Aufnahmefläche (21) aufliegt und darauf gehalten wird und seine erste Seite (51) als Sichtseite aufweist,
- eine zweite Aufnahmefläche (22), die einer Umkehrvorrichtung (25) zugeordnet ist, die dafür angeordnet ist, ein Bahnstück (5), das anfangs auf der ersten Aufnahmefläche (21) abgelegt und gehalten ist, von der ersten Aufnahmefläche (21) zur zweiten Aufnahmefläche (22) zu bringen, wobei somit eine Umkehrung des Bahnstücks (5) vorgenommen wird, um dem Bahnstück (5) eine zur ersten Ausrichtung inverse, zweite Ausrichtung zu verleihen, in der das Bahnstück (5) mit seiner ersten Seite (51) gegen die zweite Aufnahmefläche (22) gehalten wird und seine zweite Seite (5_2) als Sichtseite aufweist,
wobei die Anlage (1) **dadurch gekennzeichnet ist, dass** sie Folgendes umfasst
- ein Greiforgan (26), das dafür angeordnet ist, ein Bahnstück (5) selektiv von der ersten Aufnahmefläche (21) oder von der zweiten Aufnahmefläche (22) aufzunehmen, damit die Fügestation (12) selektiv eine Verstärkungslage (2, 2_left, 2_right) aus Bahnstücken (5) bilden kann, die entsprechend der ersten Ausrichtung bzw. der zweiten Ausrichtung ausgerichtet sind.

2. Anlage nach Anspruch 1, **dadurch gekennzeichnet, dass** die erste Aufnahmefläche (21) und die zweite Aufnahmefläche (22) eben sind.

3. Anlage nach Anspruch 1 oder 2, **dadurch gekennzeichnet, dass** die erste Aufnahmefläche (21) von einer ersten Klappe (31) getragen wird, während die zweite Aufnahmefläche (22) von einer zweiten Klappe (32) getragen wird, die bezogen auf die erste Klappe (31) um eine "Umkehrachse" (Z32) drehbar ist, so dass sie bezogen auf die erste Klappe (31) schwenken und sich so abwechselnd auf der ersten Klappe (31) schließen kann oder sich öffnen kann, indem sie sich von der ersten Klappe (31) entfernt.

4. Anlage nach einem der vorhergehenden Ansprüche, **dadurch gekennzeichnet, dass** jede der ersten und zweiten Aufnahmefläche (21, 22) ihre eigene(n) Halteorgane (41, 42) besitzt, die dafür angeordnet sind, wenn sie aktiviert sind, das Bahnstück (5) anzuziehen und es gegen die betreffende Aufnahmefläche (21, 22) zu drücken, und die unter der Kontrolle eines Steuerungssystems (43) stehen, das die Aktivierung der Halteorgane (41, 42) steuert.

5. Anlage nach Anspruch 4, **dadurch gekennzeichnet, dass** das oder die Halteorgane (41), die der ersten Aufnahmefläche (21) zugeordnet sind, "erste Halteorgane" (41) genannt, und/oder das oder die Halteorgane (42), die der zweiten Aufnahmefläche (22) zugeordnet sind, "zweite Halteorgane" (42) genannt, einen Dauermagneten (45, 46) beziehungsweise einen ersten Dauermagneten (45) und/oder einen zweiten Dauermagneten (46), vorzugsweise in Form einer Magnetplatte umfassen, die auf der Rückseite der betreffenden Aufnahmefläche (21, 22) beweglich gelagert ist, und dadurch, dass das Steuerungssystem (43) einen Betätigungsmechanismus (47, 48) umfasst, der dafür angeordnet ist den Dauermagneten (45, 46) selektiv an die betreffende Aufnahmefläche (21, 22) anzunähern oder von ihr zu entfernen, um die magnetische Anziehungskraft zu ändern, die an der Aufnahmefläche (21, 22) vom Dauermagneten (45, 46) ausgeübt wird.

6. Anlage nach den Ansprüchen 3 und 5, **dadurch gekennzeichnet, dass** der Betätigungsmechanismus (48), der dazu dient, das oder die zweiten Halteorgane (42) zu betätigen, die der zweiten Klappe (32) zugeordnet sind, Folgendes umfasst:
- einerseits eine Betätigungsstange (60), die an der zweiten Klappe (32) angebaut ist und so angebracht ist, dass sie entlang einer "Stangenachse" (Z60) translatorisch bewegbar ist, die parallel zur Umkehrachse (Z32) verläuft, wobei die Betätigungsstange (60) so angeordnet ist, dass ihre translatorischen Bewegungen die Entfernungs-/Annäherungsbewegungen des zweiten Dauermagneten (46) bezogen auf die zweite Aufnahmefläche (22) steuern, zum Beispiel durch Steuerung des Schwenkens wenigstens eines Hebels (61), der seinerseits auf einen Stößel (62) wirkt, der den zweiten Dauermagneten (46) bezogen auf die zweite Aufnahmefläche (22) bewegt,
- andererseits ein Teilstück (63) eines kreisförmigen Kragens, das sich senkrecht zur Umkehrachse (Z32) erstreckt, dessen Position auf der Abszisse entlang der Umkehrachse (Z32) durch das Steuerungssystem (43) veränderbar ist, und der um die Umkehrachse (Z32) herum einen Winkelabschnitt abdeckt, der wenigstens gleich einem "Nutzwinkelweg" ist, der es der zweiten Klappe (32) ermöglicht, bezogen auf die erste Klappe (31) zu schwenken, um die Wendung eines Bahnstücks (5) vorzunehmen,
- und schließlich einen Läufer (64), der am Ende der Betätigungsstange (60) befestigt ist und mit dem Kragenteilstück (63) so zusammenwirkt, dass sich der Läufer (64) das Kragenteilstück (63) entlang bewegt, um das gemeinsame Schwenken der Betätigungsstange (60) und der zweiten Klappe (32) um die Umkehrachse (Z32) zu begleiten, wobei er mit dem Kragenteilstück (63) in Eingriff bleibt, unabhängig von der Winkelposition der zweiten Klappe (32) bezogen auf die erste Klappe (31) um die Umkehrachse (Z32), den Nutzwinkelweg entlang,
so dass sich eine Änderung der Position auf der Abszisse des Kragenteilstücks (63) durch den Läufer (64) auf die Betätigungsstange (60) überträgt und es so ermöglicht, die Position des zweiten Dauermagneten (46) bezogen auf die zweite Aufnahmefläche (22) anzupassen, die von der zweiten Klappe (32) getragen wird.

7. Anlage nach einem der vorhergehenden Ansprüche, **dadurch gekennzeichnet, dass** das Greiforgan (26) eine Sohle (27) umfasst, vorzugsweise eine magnetische, die dafür angeordnet ist, bei Kontakt mit der Sichtseite des Bahnstücks (5) aufgebracht zu werden, das auf der ersten Aufnahmefläche (21) oder auf der ersten Aufnahmefläche (22) vorhanden ist, um das Bahnstück (5) an seiner Sichtseite aufzunehmen und das Bahnstück (5) von der Aufnahmefläche (21, 22), die es einnimmt, zur Fügestation (12) zu übertragen.

8. Anlage nach einem der vorhergehenden Ansprüche, **dadurch gekennzeichnet, dass** das Greiforgan (26) der Wendestation (20), das vorzugsweise von einem Sechs-Achsen-Roboterarm (28) getragen wird, mit der Fügestation (12) geteilt wird, so dass das Greiforgan (26) ein Bahnstück (5) von der Aufnahmefläche (21, 22), die das Bahnstück (5) einnimmt, aufnehmen, dann das Bahnstück (5) direkt auf ein Montageband (13) der Fügestation (12) ablegen kann, wobei das Bahnstück (5) an ein Bahnstück (5) angefügt wird, das bereits auf dem Montageband (13) vorhanden ist.

9. Anlage nach einem der vorhergehenden Ansprüche, **dadurch gekennzeichnet, dass** die erste Aufnahmefläche (21) bzw. die zweite Aufnahmefläche (22) jeweils eine Erstreckung aufweisen, die gleich oder größer als 90 % und vorzugsweise gleich oder größer als 100 % der Erstreckung der ersten Seite (51) des zu wendenden Bahnstücks (5) ist.

10. Anlage nach einem der vorhergehenden Ansprüche, **dadurch gekennzeichnet, dass** die Umkehrvorrichtung (25) eine erste Klappe (31), die die erste Aufnahmefläche (21) trägt, die dafür angeordnet ist, ein Bahnstück (5) aufzunehmen, sowie eine zweite Klappe (32) umfasst, die die zweite Aufnahmefläche (22) trägt und die bezogen auf die erste Klappe (31) um eine "Umkehrachse" (Z32) drehbar ist, so dass sie bezogen auf die erste Klappe (31) schwenken und sich so abwechselnd auf der ersten Klappe (31) schließen kann oder sich öffnen kann, indem sie sich von der ersten Klappe (31) entfernt, dadurch, dass die erste Klappe (31) ferner ein erstes Halteorgan (41) aufweist, das dafür angeordnet ist, wenn es aktiviert ist, das Bahnstück (5) anzuziehen und es gegen die erste Aufnahmefläche (21) zu drücken, während die zweite Klappe (32) ein zweites Halteorgan (42) aufweist, das dafür angeordnet ist, wenn es aktiviert ist, das Bahnstück (5) anzuziehen und es gegen die zweite Aufnahmefläche (22) zu drücken, und dadurch, dass das erste und zweite Halteorgan (41, 42) unter der Kontrolle eines Steuerungssystem (43) stehen, das ihre Aktivierung steuert, so dass die Umkehrvorrichtung (25) eine Wendung eines Bahnstücks (5) vornehmen kann, das anfangs entsprechend der ersten Ausrichtung auf der ersten Aufnahmefläche (21) der ersten Klappe (31) aufliegt und darauf gehalten wird, indem zuerst die zweite Klappe (32) in einer ersten Schwenkrichtung, der "Schließrichtung" (F1), um die Umkehrachse (Z32) betätigt wird, um die zweite Klappe (32) auf die erste Klappe (31) zu klappen und die zweite Aufnahmefläche (22) mit der ersten Seite (51) des Bahnstücks (5) in Kontakt zu bringen, dann das zweite Halteorgan (42) aktiviert wird, um das Bahnstück (5) anzuziehen und es gegen die zweite Aufnahmefläche (22) zu halten, dann die zweite Klappe (32) in einer zweiten Schwenkrichtung, der "Öffnungsrichtung" (F2), betätigt wird, die der ersten Schwenkrichtung (F1) entgegengesetzt ist, um die zweite Klappe (32) von der ersten Klappe (31) zu entfernen, damit die zweite Klappe (32) so auf ihrer zweiten Aufnahmefläche (22) das Bahnstück (5) mitnimmt, das in der zur ersten Ausrichtung inversen zweiten Ausrichtung ausgerichtet ist.

11. Verfahren zur Herstellung einer Verstärkungslage (2, 2_left, 2_right), umfassend:
- einen Schritt (a) des Vorbereitens eines Bahnstücks, bei dem ein Bahnstück (5) durch Zuschnitt eines "Geradbands" (6) hergestellt wird, das von einer Mehrzahl von Verstärkungsfäden (7) gebildet ist, die in wenigstens eine Gummischicht (8) eingebettet sind und sich zueinander parallel in der Längsrichtung (Z6) des Geradbands (6) erstrecken,
- einen Schritt (c) des Fügens, bei dem das Bahnstück (5) an einer seiner Kanten (5R, 5L) an ein anderes Bahnstück (5) angefügt wird, um eine Verstärkungslage (2, 2_left, 2_right) zu bilden,
wobei das Verfahren **dadurch gekennzeichnet ist, dass** es zwischen dem Schritt (a) des Vorbereitens eines Bahnstücks und dem Schritt (c) des Fügens einen Schritt (b) des Wendens eines Bahnstücks aufweist, bei dem:
- auf einer ersten Aufnahmefläche (21) das Bahnstück (5), das in der Dicke durch eine erste Seite (51) und durch eine zweite Seite (5_2), die der ersten Seite (51) gegenüberliegt, begrenzt ist, so platziert wird, dass das Bahnstück (5) in einer ersten Ausrichtung mit seiner zweiten Seite (5_2) auf der ersten Aufnahmefläche (21) aufliegt und darauf gehalten wird und seine erste Seite (51) als Sichtseite aufweist,
- dann das Bahnstück (5) gewendet wird, wobei das Bahnstück so von der ersten Aufnahmefläche (21) zu einer zweiten Aufnahmefläche (22) übertragen wird, dass das Bahnstück (5) in einer zur ersten Ausrichtung inversen, zweiten Ausrichtung mit seiner ersten Seite (51) gegen die zweite Aufnahmefläche (22) gehalten wird und seine zweite Seite (5_2) als Sichtseite aufweist,
- auf der zweiten Aufnahmefläche (22) das gewendete Bahnstück (5) mittels eines Greiforgans (26) aufgenommen wird, das so angeordnet ist, dass es selektiv entweder mit der ersten Aufnahmefläche (21) oder mit der zweiten Aufnahmefläche (22) zusammenwirken kann, um das gewendete Bahnstück zu einer Montagefläche (13) zu transportieren, wo das Bahnstück (5) entsprechend der zweiten Ausrichtung angefügt wird.

## Claims

1. Installation (1) for manufacturing a reinforcing ply (2, 2_left, 2_right), said installation comprising:
- a preparation station (4) which is arranged to prepare strips (5) by cutting a band called "straight wire band" (6) which is formed by a plurality of reinforcing wires (7) which are embedded in at least one layer of rubber (8) and which extend parallel to one another in the longitudinal direction (Z6) of said straight wire band (6),
- a jointing station (12) arranged to successively butt-joint, by their selvedges (5L, 5R), the strips (5) obtained from the preparation station (4) so as to form a reinforcing ply (2, 2_left, 2_right),
- a station (20) for turning over strips, which is interposed between the preparation station (4) and the jointing station (12) and which comprises:
- a first receiving surface (21), arranged to receive a strip (5) prepared by the preparation station (4) and to hold said strip (5) according to a first orientation in which said strip (5), which is delimited in thickness by a first face (5_1) and by a second face (5_2) opposite said first face (5_1), rests and is held on said first receiving surface (21) by its second face (5_2), and presents its first face (5_1) as visible face,
- a second receiving surface (22) associated with a reversing device (25) which is arranged to transfer a strip (5), initially placed and held on the first receiving surface (21), from said first receiving surface (21) to said second receiving surface (22), thus turning over the strip (5) so as to confer on said strip (5) a second orientation, the reverse of the first orientation, in which said strip (5) is held against the second receiving surface (22) by its first face (5_1), and presents its second face (5_2) as visible face,
said installation (1) being **characterized in that** it comprises
- a gripping member (26) arranged to take a strip (5) selectively from the first receiving surface (21) or from the second receiving surface (22) in order to allow the jointing station (12) to selectively construct a reinforcing ply (2, 2_left, 2_right) from strips (5) oriented in accordance with the first orientation or, respectively, in accordance with the second orientation.

2. Installation according to Claim 1, **characterized in that** the first receiving surface 21 and the second receiving surface 22 are flat.

3. Installation according to Claim 1 or 2, **characterized in that** the first receiving surface (21) is borne by a first flap (31), while the second receiving surface (22) is borne by a second flap (32) which is articulated relative to said first flap (31), on an axis called "turnover axis" (Z32), so as to be able to swivel relative to said first flap (31) and thus, alternately, close on the first flap (31) or open by moving away from said first flap (31).

4. Installation according to one of the preceding claims, **characterized in that** each of the first and second receiving surfaces (21, 22) has its own holding member or members (41, 42), which are arranged to, when activated, attract and press the strip (5) against the receiving surface (21, 22) concerned, and which are placed under the dependency of a control system (43) which drives the activation of said holding members (41, 42).

5. Installation according to Claim 4, **characterized in that** the holding member or members (41) associated with the first receiving surface (21), called "first holding members" (41), and/or the holding member or members (42) associated with the second receiving surface (22), called "second holding members" (42), comprise a permanent magnet (45, 46), respectively a first permanent magnet (45) and/or a second permanent magnet (46), preferably in the form of a magnetized plate, which is movably mounted on the back of the receiving surface (21, 22) concerned, and **in that** the control system (43) comprises a manoeuvring mechanism (47, 48) arranged to successively move said permanent magnet (45, 46) closer to or away from the receiving surface (21, 22) concerned in order to modify the magnetic attraction force exerted at said receiving surface (21, 22) by said permanent magnet (45, 46).

6. Installation according to Claims 3 and 5, **characterized in that** the manoeuvring mechanism (48) used to manoeuvre the second holding member or members (42) associated with the second flap (32) comprises:
- on the one hand, a manoeuvring rod (60) which is embedded on the second flap (32) and mounted so as to be movable in translation along an axis called "rod axis" (Z60) parallel to the turnover axis (Z32), said manoeuvring rod (60) being arranged so that its translational displacements control the displacements moving the second permanent magnet (46) away from/closer to the second receiving surface (22), for example by controlling the swivelling of at least one lever (61) which in turn acts on a push-rod (62) which drives the second permanent magnet (46) in displacement relative to the second receiving surface (22),
- on the other hand, a portion (63) of circular flange, which extends at right angles to the turnover axis (Z32), whose abscissa position along said turnover axis (Z32) is modifiable by the control system (43), and which covers, about said turnover axis (Z32), an angular sector which is at least equal to an angular travel, called "useful angular travel", which allows the second flap (32) to swivel relative to the first flap (31) so as to turn over a strip (5),
- and finally, a cursor (64) which is fixed to the end of the manoeuvring rod (60) and which cooperates with the portion of flange (63) so that said cursor (64) is displaced along said portion of flange (63) to accompany the joint swivelling of the manoeuvring rod (60) and of the second flap (32) about the turnover axis (Z32) while remaining engaged with said portion of flange (63) irrespective of the angular position of the second flap (32) relative to the first flap (31) about the turnover axis (Z32), along the useful angular travel,
so that a modification of the abscissa position of the portion of flange (63) is transmitted to the manoeuvring rod (60) through said cursor (64) and thus makes it possible to adjust the position of the second permanent magnet (46) relative to the second receiving surface (22) borne by the second flap (32).

7. Installation according to one of the preceding claims, **characterized in that** the gripping member (26) comprises a soleplate (27), preferably magnetized, which is arranged to be pressed into contact with the visible face of the strip (5) which is present on the first receiving surface (21) or on the second receiving surface (22), in order to take said strip (5) by its visible face and transfer said strip (5) from the receiving surface (21, 22) that said strip occupies to the jointing station (12).

8. Installation according to one of the preceding claims, **characterized in that** the gripping member (26) of the turnover station (20), preferably borne by a robotized arm (28) with six axes, is shared with the jointing station (12), so that said gripping member (26) can take a strip (5) from the receiving surface (21, 22) that said strip (5) occupies then directly deposit said strip (5) on an assembly belt (13) of the jointing station (12), by butt-jointing said strip (5) with a strip (5) already present on said assembly belt (13).

9. Installation according to one of the preceding claims, **characterized in that** the first receiving surface (21) and, respectively, the second receiving surface (22), each have an extent equal to or greater than 90%, and preferably equal to or greater than 100%, of the extent of the first face (5_1) of the strip (5) to be turned over.

10. Installation according to one of the preceding claims, **characterized in that** the reversing device (25) comprises a first flap (31) which bears the first receiving surface (21) arranged to receive a strip (5), and a second flap (32) which bears the second receiving surface (22) and which is articulated relative to said first flap (31) on an axis called "turnover axis" (Z32), so as to be able to swivel relative to said first flap (31) and thus alternately either close on the first flap (31) or open by moving away from said first flap (31), **in that** the first flap (31) also comprises a first holding member (41) arranged to, when activated, attract and press the strip (5) against the first receiving surface (21), while the second flap (32) comprises a second holding member (42) arranged to, when activated, attract and press the strip (5) against the second receiving surface (22), and **in that** the first and second holding members (41, 42) are placed under the dependency of a control system (43) which drives their activation, so that the reversing device (25) can turn over a strip (5), which initially rests and is held on the first receiving surface (21) of the first flap (31) according to the first orientation, by first actuating the second flap (32) in a first swivelling direction, called "direction of closure" (F1), about the turnover axis (Z32), so as to fold back the second flap (32) on the first flap (31) and bring the second receiving surface (22) into contact with the first face (5_1) of the strip (5), then by activating the second holding member (42) so as to attract and hold the strip (5) against the second receiving surface (22), then by actuating the second flap (32) in a second swivelling direction, called "direction of opening" (F2), opposite the first swivelling direction (F1), so as to move the second flap (32) away from the first flap (31) so that said second flap (32) thus removes, from its second receiving surface (22), the strip (5) oriented according to the second orientation, the reverse of the first orientation.

11. Method for manufacturing reinforcing plies (2, 2_left, 2_right) comprising:
- a step (a) of preparation of a strip during which a strip (5) is produced by cutting a band called "straight wire band" (6) which is formed by a plurality of reinforcing wires (7) which are embedded in at least one layer of rubber (8) and which extend parallel to one another in the longitudinal direction (Z6) of said straight wire band (6),
- a butt-jointing step (c) during which said band (5) is butt-jointed, by one of its selvedges (5R, 5L), to another band (5) so as to form a reinforcing ply (2, 2_left, 2_right),
said method being **characterized in that** it comprises, between the strip preparation step (a) and the butt-jointing step (c), a step (b) of turning over the band during which:
- the strip (5), which is delimited in thickness by a first face (5_1) and by a second face (5_2) opposite said first face (5_1) is placed on a first receiving surface (21), so that said strip (5) rests and is held on said first receiving surface (21) by its second face (5_2), and presents its first face (5_1) as visible face, according to a first orientation,
- then the strip (5) is turned over by transferring said strip from the first receiving surface (21) to a second receiving surface (22), so that said strip (5) is held against the second receiving surface (22) by its first face (5_1), and presents its second face (5_2) as visible face, according to a second orientation that is the reverse of the first,
- the turned-over strip (5) is taken from the second receiving surface (22), by means of a gripping member (26) which is arranged so as to be able to cooperate selectively either with the first receiving surface (21), or with the second receiving surface (22), in order to transport said turned-over strip to an assembly surface (13) where said strip (5) is butt-jointed according to the second orientation.
